# EUROPEAN PATENT SPECIFICATION

(11) **EP 4 040 063 B1**
(45) Date of publication and mention of the grant of the patent: **21.08.2024**
(21) Application number: 20872330.4
(22) Date of filing: 29.09.2020
(51) Int. Cl.: F24F 11/30, G06Q 30/06

(54) **RESIDUAL VALUE CALCULATION SYSTEM FOR AIR CONDITIONER**
RESTWERTBERECHNUNGSSYSTEM FÜR KLIMAANLAGE
SYSTÈME DE CALCUL DE VALEUR RESTANTE POUR CLIMATISEUR

(30) Priority: 30.09.2019 JP 2019180443; 30.09.2019 JP 2019180444
(43) Date of publication of application: 10.08.2022
(73) Proprietor: Daikin Industries, Ltd., Osaka-shi, Osaka 530-0001 (JP)
(72) Inventor: MAEDA, Chikara, Osaka 530-8323 (JP); NARIKIYO, Yasutaka, Osaka 530-8323 (JP)
(74) Representative: Hoffmann Eitle
(86) International application number: PCT/JP2020/036825
(87) International publication number: WO 2021/065882

(56) References cited:
- WO-A1-2015/145979
- JP-A- 2001 182 991
- JP-A- 2001 182 991
- JP-A- 2001 195 448
- JP-A- 2001 195 448
- JP-A- 2005 265 286
- JP-A- 2005 265 286
- JP-A- 2006 350 610
- US-A1- 2003 070 438
- US-A1- 2009 182 455

## Description

### TECHNICAL FIELD

The present invention relates to a residual value calculation system for an air conditioner.

### BACKGROUND ART

The remaining life of a used device may be estimated. The used device may be evaluated based on the estimation of the life of the used device.

JP 2015 141600 A discloses a technique of a system for calculating a residual value of a device. The technique disclosed in JP 2015 141600 A calculates a residual value of a car. In this technique, a lease residual value setting price of the car is calculated based on the distance traveled by the vehicle, maintenance and repair record information, and the like.

A further example of a previously known configuration is derivable from JP 2001 195 448 A, which, according to its abstract, discloses a calculation of a remaining value in the case of recycling an electrical appliance by a collection enterprise.

### SUMMARY OF INVENTION

### Technical Problem

When an air conditioner is reused, the remaining life of the air conditioner after being rented may want to be estimated. In the present embodiment, the remaining life of an air conditioner is defined as a length of time for which the air conditioner may be used when the air conditioner is used in a normal operation. For example, when an air conditioner is rented by a lease or subscription, the remaining life of the air conditioner after the rental may want to be estimated. Also, when purchasing an air conditioner that has been sold and used, the remaining life of the air conditioner may want to be estimated. Even when air conditioners are rented for the same rental period, the remaining life after the rental may greatly differ between the air conditioners. Therefore, it is difficult to estimate a remaining life of an air conditioner. It is a first objective of the present invention is to provide a residual value calculation system that accurately calculates a remaining life of an air conditioner.

### Solution to Problem

(1) To solve the above problem, the present invention provides a residual value calculation system comprising the features of independent claim 1. Distinct embodiments are derivable from the dependent claims.

Such a residual value calculation system is configured to accurately calculate a remaining life of an air conditioner including an indoor unit and an outdoor unit. The residual value calculation system includes a management device that manages the air conditioner. The management device includes an obtaining unit that obtains first environment information related to an installation environment of the indoor unit and second environment information related to an installation environment of the outdoor unit, and a calculating unit that calculates a residual value of the air conditioner after use over a set period based on the first environment information and the second environment information. The residual value includes an initial estimation residual value that is estimated before the air conditioner is used and an actual estimation residual value that is based on actual use.

The indoor unit and the outdoor unit of the air conditioner are installed in different environments. For example, the indoor unit is installed in various environments such as an office, a restaurant, and a gym. The outdoor unit is installed outdoors. The outdoor environment varies depending on the region where the air conditioner is installed. Thus, the environment of the indoor unit and the environment of the outdoor unit differ from each other and include various environments. In this regard, with the configuration described above, the residual value is calculated based on the first environment information related to the installation environment of the indoor unit and the second environment information related to the installation environment of the outdoor unit, so that the calculation of the residual value reflects the effect of the environments. Thus, the residual value is accurately calculated.

(2) In the residual value calculation system described above, the air conditioner includes an air conditioner that is rented. With this configuration, the residual value of an air conditioner that is rented is accurately calculated.

(3) In the residual value calculation system described above, the air conditioner includes one or more indoor units and one or more outdoor units. The obtaining unit obtains a contribution rate of each of the indoor units and a contribution rate of each of the outdoor units to the air conditioner. The calculating unit calculates a residual value of each of the indoor units after use over the set period based on at least the first environment information. The calculating unit calculates a residual value of each of the outdoor units after use over the set period based on at least the second environment information. The calculating unit calculates a residual value of the air conditioner based on the contribution rate of each of the indoor units, the contribution rate of each of the outdoor units, the residual value of each of the indoor units, and the residual value of each of the outdoor units.

With this configuration, when a system includes multiple indoor units and multiple outdoor units, the calculation of the residual value reflects the contribution rate of the indoor unit and the contribution rate of the outdoor unit to the air conditioner. Thus, the residual value of the air conditioner is accurately calculated.

(4) In the residual value calculation system described above, the calculating unit executes at least one of calculating a residual value of each of the indoor units after use over the set period based on a residual value of each component of the indoor unit after use over the set period and a contribution rate of the component to the indoor unit, or calculating a residual value of each of the outdoor units after use over the set period based on a residual value of each component of the outdoor unit after use over the set period and a contribution rate of the component to the outdoor unit.

With this configuration, the calculation of the residual value of the indoor unit reflects the residual value of each component and the contribution rate of each component to the indoor unit. Also, the calculation of the residual value of the outdoor unit reflects the residual value of each component and the contribution rate of each component to the outdoor unit. Thus, the residual value of the air conditioner is accurately calculated.

(5) In the residual value calculation system described above, the obtaining unit further obtains durability information of each component of each of the indoor units and durability information of each component of each of the outdoor units. The calculating unit calculates a residual value of each component of each of the indoor units after use over the set period based on at least the durability information of the component of the indoor unit and the first environment information. The calculating unit calculates a residual value of each component of each of the outdoor units after use over the set period based on at least the durability information of the component of the outdoor unit and the second environment information. The calculating unit further corrects the durability information of each component of each of the indoor units with a correction coefficient based on at least one of the first environment information, an installation condition, operation information, or maintenance information. The calculating unit further corrects the durability information of each component of each of the outdoor units with a correction coefficient based on at least one of the second environment information, an installation condition, operation information, or maintenance information.

With this configuration, the calculation of the residual value of each component in the indoor unit reflects the durability information of the component and the first environment information. Also, the calculation of the residual value of each component in the outdoor unit reflects the durability information of the component and the second environment information. In addition, the durability information of each component in the indoor unit is corrected with the correction coefficient based on at least one of the first environment information, the installation condition, the operation information, or the maintenance information. The durability information of each component in the outdoor unit is corrected with the correction coefficient based on at least one of the second environment information, the installation condition, the operation information, or the maintenance information. Since the durability information is corrected based on the environment information and the like, the residual value of the air conditioner is accurately calculated.

(6) In the residual value calculation system described above, each of the correction coefficients is a value learned by machine learning.

With this configuration, the correction coefficients are optimized by machine learning. Thus, the residual value of the air conditioner is accurately calculated.

(7) In the residual value calculation system described above, when calculating, before use, an initial estimation residual value of each component of each of the indoor units after use over the set period and an initial estimation residual value of each component of each of the outdoor units after use over the set period, the calculating unit uses initial first environment information, initial second environment information, an initial installation condition, planned operation information, and planned maintenance information. When calculating, during use, an actual estimation residual value of each component of each of the indoor units after use over the set period and an actual estimation residual value of each component of each of the outdoor units after use over the set period, the calculating unit uses actual first environment information, actual second environment information, an actual installation condition, actual operation information, and actual maintenance information.

This configuration has the advantages (a) and (b) described below.
(a) The initial estimation residual value of each component in the indoor unit and each component in the outdoor unit is calculated using the initial first environment information, the initial second environment information, the initial installation condition, the planned operation information, and the planned maintenance information. Thus, the initial estimation residual value of each component is accurately calculated.
(b) The actual estimation residual value of each component in the indoor unit and each component in the outdoor unit is calculated using the actual first environment information, the actual second environment information, the actual installation condition, the actual operation information, and the actual maintenance information. Thus, the actual estimation residual value of each component is accurately calculated.

### BRIEF DESCRIPTION OF DRAWINGS

Fig. 1 is a schematic diagram of a lease residual value calculation system in a first embodiment of a residual value calculation system.
Fig. 2 is a schematic diagram of an air conditioner.
Fig. 3 is a table including numerical values used to calculate a residual value of an outdoor unit.
Fig. 4 is a table including numerical values used to calculate a residual value of an indoor unit.
Fig. 5 is a table showing a calculating process of a residual value of an air conditioner.
Fig. 6 is a table showing rates related to maintenance.
Fig. 7 is a table showing the relationship between second environment information, component durability information, and a component residual value.
Fig. 8 is a table showing the residual value and the contribution rate of each component.
Fig. 9 is a table for an air conditioner that includes multiple indoor units and an outdoor unit showing the contribution rate of each indoor unit and the outdoor unit.
Fig. 10 is a schematic diagram of a lease assistance system in an assistance system of the first embodiment not forming part of the invention.
Fig. 11 is a schematic diagram of an air conditioner.
Fig. 12 is a table showing the contents of a first process and the contents of a second process.
Fig. 13 is a diagram illustrating the first process for predicting deviation of an actual estimation residual value from an initial estimation residual value.
Fig. 14 is a diagram illustrating the second process for predicting deviation of an actual estimation residual value from an initial estimation residual value.
Fig. 15 is a table including numerical values used to calculate a residual value of an outdoor unit.
Fig. 16 is a table including numerical values used to calculate a residual value of an indoor unit.
Fig. 17 is a table showing a calculating process of a residual value of an air conditioner.
Fig. 18 is a table showing rates related to maintenance.
Fig. 19 is a table showing the relationship between second environment information, component durability information, and a component residual value.
Fig. 20 is a table showing the residual value and the contribution rate of each component.
Fig. 21 is a schematic diagram of a lease assistance system in a second embodiment of an assistance system not forming part of the invention.
Fig. 22 is a table showing the relationship of the difference in residual value and the priority order of each indoor unit.
Fig. 23 is a schematic diagram of a lease assistance system in a second embodiment of an assistance system not forming part of the invention.
Fig. 24 is a table showing the relationship of the difference in residual value and the priority order of each outdoor unit

### DESCRIPTION OF EMBODIMENTS

### Residual Value Calculation System

The residual value calculation system calculates a residual value of an air conditioner. For example, the residual value calculation system calculates a residual value of an air conditioner that is rented on the conditions of a usage environment and a usage condition that are set in advance. The calculation of a residual value includes calculating a residual value of an air conditioner after use over a set period before the air conditioner is rented and calculating a residual value of an air conditioner at a time of completion of the use during the rental of the air conditioner. The air conditioner may be rented by a lease or subscription. Hereafter, a lease residual value calculation system for an air conditioner that is rented by a lease will be described as an example of the residual value calculation system. In the following embodiments, the set period corresponds to a lease period. The "after use over a set period" corresponds to an end of a lease.

JP 2015 141600 A discloses a technique related to the lease residual value calculation system. In the technique disclosed in JP 2015 141600 A, a lease residual value setting price of a vehicle is calculated based on a distance traveled, maintenance and repair record information, and the like. In the case of an air conditioner, the residual value may vary even when the air conditioner has been used for the same length of time. It is preferred that the residual value of an air conditioner is accurately calculated. An overview of the lease residual value calculation system will be described below

A lease residual value calculation system for an air conditioner includes a management device that manages an indoor unit and an outdoor unit of the air conditioner. In the lease residual value calculation system, the management device includes an obtaining unit that obtains first environment information related to an installation environment of the indoor unit and second environment information related to an installation environment of the outdoor unit, and a calculating unit that calculates a residual value at the end of a lease based on the first environment information and the second environment information.

The indoor unit and the outdoor unit of the air conditioner are installed in different environments. For example, the indoor unit is installed in various environments such as an office, a restaurant, and a gym. The outdoor unit is installed outdoors. The outdoor environment varies depending on the region where the air conditioner is installed. Thus, the environment of the indoor unit and the environment of the outdoor unit differ from each other and include various environments. In this regard, with the configuration described above, the residual value is calculated based on the first environment information related to the installation environment of the indoor unit and the second environment information related to the installation environment of the outdoor unit, so that the calculation of the residual value reflects the effect of the environments. Thus, the residual value is accurately calculated.

In the lease residual value calculation system, the obtaining unit further obtains a lease initial operation condition of the indoor unit and a lease initial operation condition of the outdoor unit. The calculating unit calculates an initial lease-end estimation residual value based on the first environment information, the second environment information, the lease initial operation condition of the indoor unit, and the lease initial operation condition of the outdoor unit as a residual value that is initially estimated.

This configuration calculates the initial estimation residual value based on the first environment information, the second environment information, the operation condition of the indoor unit, and the operation condition of the outdoor unit. Thus, the initial estimation residual value is accurately calculated.

In the lease residual value calculation system, the obtaining unit further obtains planned maintenance information related to maintenance of the air conditioner planned to be performed during a lease. The calculating unit calculates the initial estimation residual value of the air conditioner at the end of the lease based on the first environment information, the second environment information, the lease initial operation condition of the indoor unit, the lease initial operation condition of the outdoor unit, and the planned maintenance information.

With this configuration, the calculation of the initial estimation residual value further reflects the planned maintenance information. Thus, the initial estimation residual value is accurately calculated.

In the lease residual value calculation system, the obtaining unit further obtains durability information of each component in the indoor unit and durability information of each component in the outdoor unit. The calculating unit calculates a residual value of the indoor unit based on at least the durability information of each component in the indoor unit, the first environment information, and the lease initial operation condition of the indoor unit. The calculating unit calculates a residual value of the outdoor unit based on at least the durability information of each component in the outdoor unit, the second environment information, and the lease initial operation condition of the outdoor unit. The calculating unit calculates the initial estimation residual value at the end of the lease based on the residual value of the indoor unit and the residual value of the outdoor unit.

With this configuration, the calculation of the initial estimation residual value further reflects the durability information. Thus, the initial estimation residual value is accurately calculated.

In the lease residual value calculation system, the obtaining unit further obtains durability information of each component in the indoor unit and durability information of each component in the outdoor unit. The calculating unit calculates a residual value of the indoor unit based on at least the durability information of each component in the indoor unit, the first environment information, the lease initial operation condition of the indoor unit, and the planned maintenance information of the indoor unit. The calculating unit calculates a residual value of the outdoor unit based on at least the durability information of each component in the outdoor unit, the second environment information, the lease initial operation condition of the outdoor unit, and the planned maintenance information of the outdoor unit. The calculating unit calculates the initial estimation residual value at the end of the lease based on the residual value of the indoor unit and the residual value of the outdoor unit.

With this configuration, the calculation of the initial estimation residual value further reflects the planned maintenance information and the durability information of each component. Thus, the initial estimation residual value is accurately calculated.

In the lease residual value calculation system, the calculating unit corrects the durability information of each component in the indoor unit based on the first environment information and corrects the durability information of each component in the outdoor unit based on the second environment information.

With this configuration, the durability information of each component in the indoor unit is corrected in accordance with the installation environment of the indoor unit, and the durability information of each component in the outdoor unit is corrected in accordance with the installation environment of the outdoor unit. Thus, the initial estimation residual value is accurately calculated.

In the lease residual value calculation system, the air conditioner includes one or more indoor units and one or more outdoor units. The obtaining unit obtains a contribution rate of each indoor unit to the air conditioner and a contribution rate of each outdoor unit to the air conditioner. The calculating unit calculates a residual value of each indoor unit at the end of the lease based on at least the first environment information and the lease initial operation condition of the indoor unit. The calculating unit calculates a residual value of each outdoor unit at the end of the lease based on at least the second environment information and the lease initial operation condition of the outdoor unit. The calculating unit calculates the initial estimation residual value of the air conditioner based on the contribution rate of the indoor unit, the contribution rate of the outdoor unit, the residual value of the indoor unit, and the residual value of the outdoor unit.

With this configuration, when a system includes multiple indoor units and multiple outdoor units, calculation of an initial estimation residual value reflects the contribution rate of each indoor unit and the contribution rate of each outdoor unit to the air conditioner. Thus, the initial estimation residual value is accurately calculated.

In the lease residual value calculation system, the obtaining unit further obtains operation record information related to operation record of the indoor unit to a specific time in the lease period and operation record information related to operation record of the outdoor unit to a specific time in the lease period. The calculating unit calculates an actual estimation residual value of the air conditioner at the end of the lease based on the first environment information, the second environment information, the operation record information related to the operation record of the indoor unit to the specific time in the lease period, and the operation record information related to the operation record of the outdoor unit to the specific time in the lease period as a residual value that is calculated during the lease period.

This configuration calculates the initial estimation residual value based on the first environment information, the second environment information, the operation record information of the indoor unit, and the operation record information of the outdoor unit. Thus, the actual estimation residual value reflects the actual use and is accurately calculated.

In the lease residual value calculation system, the obtaining unit further obtains maintenance information (maintenance history information) related to maintenance of the air conditioner performed by a specific time in the lease period. The calculating unit calculates an actual estimation residual value of the air conditioner at the end of the lease based on the first environment information, the second environment maintenance information (maintenance history information), the operation record information related to information, the operation record of the indoor unit to the specific time in the lease period, and the operation record information of the outdoor unit to the specific time in the lease period.

With this configuration, the calculation of the actual estimation residual value further reflects the maintenance information (maintenance history information). Thus, the actual estimation residual value is accurately calculated.

In the lease residual value calculation system, the obtaining unit further obtains the durability information of each component in the indoor unit and the durability information of each component in the outdoor unit. The calculating unit calculates a residual value of the indoor unit based on at least the first environment information of the indoor unit, the durability information of each component in the indoor unit, and the operation record information of the indoor unit to the specific time in the lease period. The calculating unit calculates a residual value of the outdoor unit based on at least the second environment information of the outdoor unit, the durability information of each component in the outdoor unit, and the operation record information of the outdoor unit to the specific time in the lease period. The calculating unit calculates an actual estimation residual value of the air conditioner at the end of the lease based on the residual value of the indoor unit and the residual value of the outdoor unit.

With this configuration, the calculation of the actual estimation residual value further reflects the durability information of the components. Thus, the actual estimation residual value is accurately calculated.

In the lease residual value calculation system, the obtaining unit further obtains the durability information of each component in the indoor unit and the durability information of each component in the outdoor unit. The calculating unit calculates a residual value of the indoor unit based on at least the first environment information of the indoor unit, the durability information of each component in the indoor unit, the operation record information of the indoor unit to the specific time in the lease period, and the maintenance information (maintenance history information) of the indoor unit. The calculating unit calculates a residual value of the outdoor unit based on at least the second environment information of the outdoor unit, the durability information of each component in the outdoor unit, the operation record information of the outdoor unit to the specific time in the lease period, and the maintenance information (maintenance history information) of the outdoor unit. The calculating unit calculates an actual estimation residual value of the air conditioner at the end of the lease based on the residual value of the indoor unit and the residual value of the outdoor unit.

With this configuration, the calculation of the actual estimation residual value further reflects the maintenance information (maintenance history information) and the durability information of components. Thus, the actual estimation residual value is accurately calculated.

In the lease residual value calculation system, the calculating unit corrects the durability information of each component in the indoor unit based on the first environment information and corrects the durability information of each component in the outdoor unit based on the second environment information.

With this configuration, the durability information of each component in the indoor unit is corrected in accordance with the installation environment of the indoor unit, and the durability information of each component in the outdoor unit is corrected in accordance with the installation environment of the outdoor unit. Thus, the actual estimation residual value is accurately calculated in accordance with the installation environments.

In the lease residual value calculation system, the air conditioner includes one or more indoor units and one or more outdoor units. The obtaining unit obtains the contribution rate of each indoor unit and the contribution rate of each outdoor unit to the air conditioner. The calculating unit calculates a residual value of each indoor unit based on at least the first environment information and the operation record information related to the operation record of the indoor unit to the specific time in the lease period. The calculating unit calculates a residual value of each outdoor unit based on at least the second environment information and the operation record information related to the operation record of the outdoor unit to the specific time in the lease period. The calculating unit calculates an actual estimation residual value of the air conditioner based on the contribution rate of the outdoor unit, the contribution rate of the outdoor unit, the residual value of the indoor unit, and the residual value of the outdoor unit.

With this configuration, when a system includes multiple indoor units and multiple outdoor units, calculation of an actual estimation residual value reflects the contribution rate of the indoor units and the contribution rate of the outdoor units to the air conditioner. Thus, the actual estimation residual value is accurately calculated.

### First Embodiment of Residual Value Calculation System

Hereafter, a lease residual value calculation system 1 for an air conditioner 2 will be described. The lease residual value calculation system 1 for the air conditioner 2 calculates a residual value of the air conditioner 2 that is subject to a lease.

The residual value of the air conditioner 2 refers to a remaining value obtained by subtracting a value depreciated by the use of the air conditioner 2 from an initial usage value set in advance for the air conditioner 2. In an example, the initial usage value is defined as 100. The value of an air conditioner 2 that is not usable due to wear is defined as 0. The residual value is expressed as percentage.

The residual value of the air conditioner 2, which is subject to a lease, includes a lease-end residual value that is set at the beginning of a lease (hereafter, referred to as "initial estimation residual value") and a lease-end residual value that is estimated during the lease (hereafter, referred to as "actual estimation residual value"). In the present embodiment, the lease residual value calculation system 1 calculates at least one of the initial estimation residual value or the actual estimation residual value. In an example, the initial estimation residual value is presented to a lease contractor as an estimation of the residual value of the air conditioner 2 at the time of an initial contract. Presentation of the initial estimation residual value allows the lease contractor to determine the validity of a lease price. The actual estimation residual value may present a lease-end residual value of the air conditioner 2 to the lease contractor or the user of the air conditioner 2 during the lease. Presentation of the actual estimation residual value allows for acknowledgement of the present usage state with respect to a future residual value of the air conditioner 2.

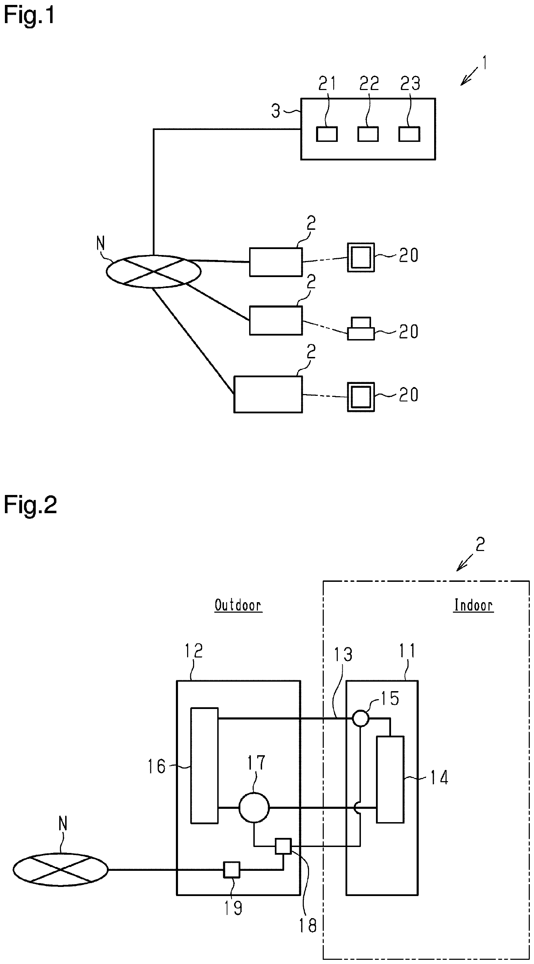

As shown in Fig. 1, the lease residual value calculation system 1 includes a management device 3. The management device 3 manages an air conditioner 2.

In the present embodiment, the management device 3 manages one or more air conditioners 2 having a lease setting. Lease refers to "operating lease". The air conditioner 2 having a lease setting is rented to a user. During the lease, the user is allowed to use the air conditioner 2.

A lease contract specifies a lease period and an initial lease-end estimation residual value. The lease price is set based on a value obtained by subtracting the initial lease-end estimation residual value of the air conditioner 2 from the initial value of the air conditioner 2 that is set at the beginning of the lease.

With reference to Fig. 2, the air conditioner 2 that is managed by the management device 3 will be described.

The air conditioner 2 is subject property of a lease contract. The air conditioner 2 is configured to communicate with the management device 3. The air conditioner 2 is configured to transmit an operation record of the air conditioner 2 to the management device 3. An example of the air conditioner 2 will be described below.

The air conditioner 2 includes an indoor unit 11 and an outdoor unit 12. The air conditioner 2 may include a refrigerant pipe 13 connecting the indoor unit 11 and the outdoor unit 12. The indoor unit 11 includes an indoor-side heat exchanger 14 and an electronic expansion valve 15 that expands a refrigerant. The outdoor unit 12 includes an outdoor-side heat exchanger 16, a compressor 17 that compresses the refrigerant, a controller 18, and a communication unit 19. The refrigerant pipe 13 has a structure of a closed circuit including the indoor-side heat exchanger 14 and the outdoor-side heat exchanger 16. The communication unit 19 communicates with the management device 3.

The controller 18 of the air conditioner 2 collects operation records related to operation of the air conditioner 2. The operation records include an accumulated operation time of the compressor 17, an accumulated activation-deactivation frequency of the compressor 17, an activation-deactivation frequency of the compressor 17 per unit time, and an accumulated operation time of the indoor unit 11. The communication unit 19 of the air conditioner 2 transmits the operation records of the air conditioner 2 to the management device 3 periodically or in response to a request instruction from the management device 3.

With reference to Fig. 1, the management device 3 will be described.

The management device 3 may be directly connected to the air conditioner 2. The management device 3 may be connected to the air conditioner 2 by a network N. The network N includes at least one of a local network or the Internet. In the present embodiment, the management device 3 is connected to the air conditioner 2 by the network N.

The management device 3 manages a predetermined device 20 in addition to the air conditioner 2. The predetermined device 20 communicates with the management device 3. The communication includes unidirectional and bidirectional communications. An example of the predetermined device 20 is an information terminal. The predetermined device 20 has identification information for communication. The identification information includes an address unique to the predetermined device 20 for communication. The management device 3 stores at least the identification information of the predetermined device 20.

The management device 3 associates the predetermined device 20, as a receiver of information related to the air conditioner 2, with the air conditioner 2. Two or more predetermined devices 20 may be associated with a single air conditioner 2. The management device 3 stores the air conditioner 2 in association with the predetermined devices 20. The management device 3 transmits information calculated for the air conditioner 2 to the predetermined device 20 that is associated with the air conditioner 2. In an example, the management device 3 transmits an initial estimation residual value or an actual estimation residual value calculated by the management device 3 to the predetermined device 20 in response to a request. The management device 3 may transmit the actual estimation residual value to the predetermined device 20 periodically or at a scheduled time.

The management device 3 may manage multiple air conditioners 2. The user or the administrator may differ between the air conditioners 2. The management device 3 associates each air conditioner 2 with a predetermined device 20 as a receiver of information of the air conditioner 2.

Preferably, the information terminal as the predetermined device 20 includes a display that shows the information. The information terminal includes a mobile phone, a smartphone, a laptop, a personal computer.

The management device 3 includes storage 21. The storage 21 stores the lease period and the initial estimation residual value of the air conditioner 2. The initial estimation residual value may be set by an agreement between the leasing company and the user or may be by a calculating unit 23 as described later. The storage 21 stores information obtained by the management device 3.

As shown in Fig. 1, the management device 3 includes an obtaining unit 22 and a calculating unit 23.

The obtaining unit 22 obtains first environment information and second environment information. In the present embodiment, the obtaining includes accessing the air conditioner 2 and obtaining information stored in the air conditioner 2, accessing the storage 21 of the management device 3 and obtaining information stored in the management device 3, and receiving information that is input by an input device.

The first environment information is information related to the installation environment of the indoor unit 11. The first environment information is associated with the air conditioner 2 and stored in the storage 21 in advance. The first environment information includes at least one of a region, a regional climate, an altitude, a usage purpose, an installation location, or an indoor temperature. The region includes at least one of a plain area, a coastal area, a mountain area, or an urban area. The regional climate includes at least one of a polar climate, a temperate climate, an and climate, a tropical climate, a subtropical climate, or a subarctic climate. The altitude includes a low altitude, a middle altitude, and a high altitude. The usage purpose includes at least one of an office, food and beverage, a gym, a shop, learning, device manufacturing, or food manufacturing. The installation location indicates an indoor installation location. The installation location includes at least one of an office workroom, a dining room, a cooking room, a kitchen, a smoking room, an entrance, a sealing, or a window side. The indoor temperature includes an indoor average temperature and an indoor average humidity in summer and an indoor average temperature and an indoor average humidity in winter.

The second environment information is information related to the installation environment of the outdoor unit 12. The second environment information is associated with the air conditioner 2 and stored in the storage 21 in advance. The second environment information includes at least one of a region, a regional climate, an altitude, an installation location, or an outdoor air condition. The installation location indicates whether a shield against wind or rain is present. Examples of the shield include an eave, a roof, and a wall. The region, the regional climate, and the altitude are as described above. The outdoor air condition includes an average temperature and an average humidity of the region in summer and an average temperature and an average humidity of the region in winter.

The calculating unit 23 calculates a lease-end residual value based on the first environment information and the second environment information. The residual value includes an initial estimation residual value and an actual estimation residual value.

Wear and deterioration of the air conditioner 2 are affected by the environment in which the indoor unit 11 is installed and the environment in which the outdoor unit 12 is installed. For example, when the indoor unit 11 is installed in an office having a controlled air environment, wear and deterioration of the indoor unit 11 are slow. When installed in a restaurant facing a street having heavy traffic, the indoor unit 11 wears or deteriorates quickly. When the outdoor unit 12 is installed in a coastal region in which the air has a large salt content, wear and deterioration of the air conditioner 2 are quick. Therefore, the calculating unit 23 calculates the lease-end residual value based on the first environment information and the second environment information. Thus, the residual value is appropriately calculated in accordance with the environment. A specific example of calculation of the residual value will be described below.

### Initial Estimation Residual Value Calculation Example

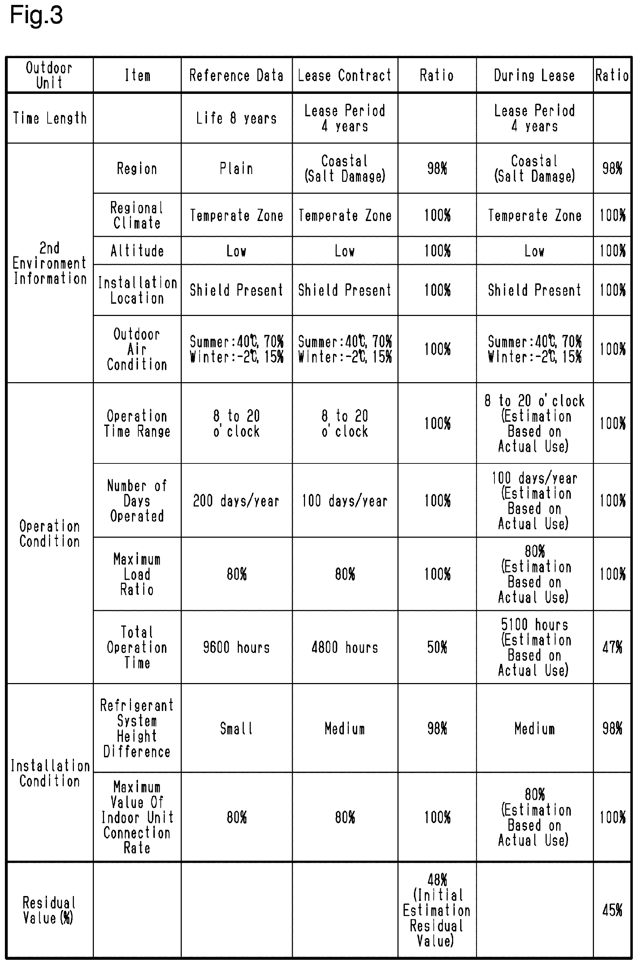

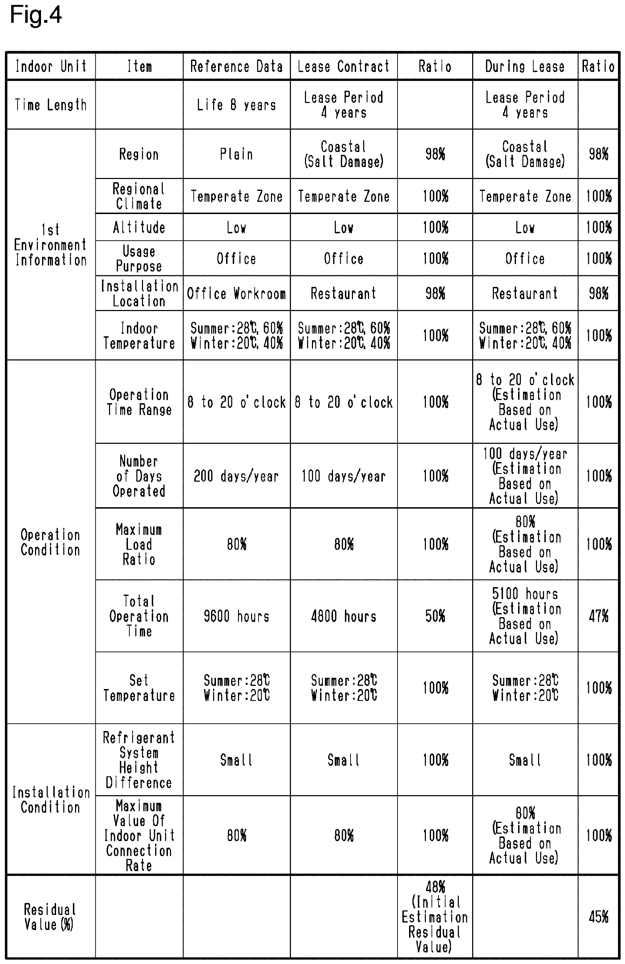

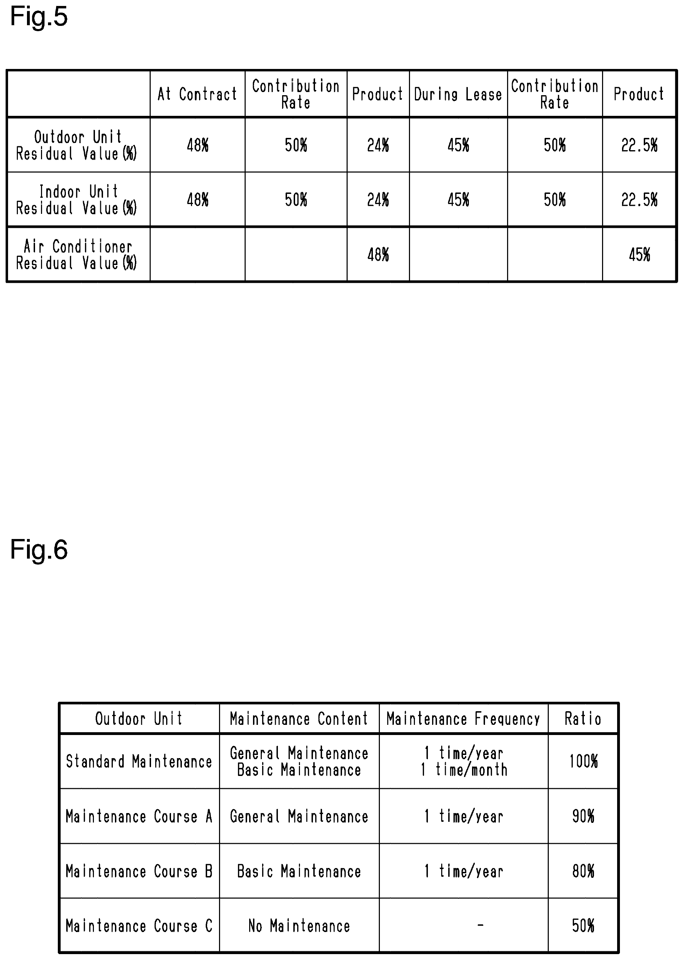

With reference to Figs. 3 to 5, a first calculating process of an initial estimation residual value will be described. Fig. 3 is a table including numerical values used to calculate a residual value of the outdoor unit 12. Fig. 4 is a table including numerical values used to calculate a residual value of the indoor unit 11. Fig. 5 is a table for describing a calculating process of a residual value of the air conditioner 2.

The obtaining unit 22 obtains an operation condition (initial operation condition) of the indoor unit 11 and an operation condition (initial operation condition) of the outdoor unit 12 at the beginning of a lease. In a lease contract, an operation condition of the air conditioner 2 is specified at the time of the contract. The operation condition includes an operation time and a set temperature of the indoor unit 11. Wear and deterioration of the air conditioner 2 vary depending on the operation condition in addition to the first environment information and the second environment information. Therefore, it is preferred that the operation condition is reflected in calculation of the initial estimation residual value.

The calculating unit 23 calculates an initial lease-end estimation residual value based on the first environment information, the second environment information, the lease initial operation condition of the indoor unit 11, and the lease initial operation condition of the outdoor unit 12.

More specifically, the calculating unit 23 calculates the initial estimation residual value based on an initial estimation residual value of the indoor unit 11 at the end of the lease (hereafter, referred to as "first initial estimation residual value") and an initial estimation residual value of the outdoor unit 12 at the end of the lease (hereafter, referred to as "the second initial estimation residual value").

The calculating unit 23 calculates the second initial estimation residual value of the outdoor unit 12 based on the second environment information and the lease initial operation condition of the outdoor unit 12.

The operation condition of the outdoor unit 12 includes at least one of a daily operation time range, the number of days operated in a year, a maximum load ratio, or a total operation time. In an example, the operation of the outdoor unit 12 is defined as operation of the compressor 17. The daily operation time range refers to a time range from the time at which operation is started to the time at which the operation is stopped in a day. The number of days operated in a year is obtained by subtracting the number of non-operation days from the number of days in a year. The maximum load ratio refers to the ratio of load on the outdoor unit 12 to the maximum load designed for the outdoor unit 12. In an example, the total operation time refers to an accumulated time in which the compressor 17 is in operation.

The calculating unit 23 calculates the first initial estimation residual value of the indoor unit 11 based on the first environment information and the lease initial operation condition of the indoor unit 11.

The operation condition of the indoor unit 11 includes at least one of a daily operation time range, the number of days operated in a year, a maximum load ratio, a total operation time, or a set temperature. In an example, the operation of the indoor unit 11 is defined as operation of a fan. In an example, the total operation time refers to an accumulated time in which the fan is in operation.

The calculating unit 23 has the contribution rate of the indoor unit 11 to the air conditioner 2 and the contribution rate of the outdoor unit 12 to the air conditioner 2 that are set in advance in the air conditioner 2. The calculating unit 23 calculates a sum of the product of the first initial estimation residual value of the indoor unit 11 and the contribution rate of the indoor unit 11 and the product of the second initial estimation residual value of the outdoor unit 12 and the contribution rate of the outdoor unit 12 as the initial estimation residual value of the air conditioner 2. Fig. 5 shows an example of the contribution rate of the indoor unit 11 and the contribution rate of the outdoor unit 12.

Further, preferably, the obtaining unit 22 obtains the installation condition of the indoor unit 11 and the installation condition of the outdoor unit 12. In the present embodiment, the installation condition of the indoor unit 11 and the installation condition of the outdoor unit 12 include the same items (refer to Figs. 3 and 4).

The calculating unit 23 may calculate the initial estimation residual value of the outdoor unit 12 based on the second environment information, the lease initial operation condition of the outdoor unit 12, and the lease initial installation condition of the outdoor unit 12.

The installation condition of the outdoor unit 12 includes a height difference of a refrigerant system. As the height difference of the refrigerant system increases, the air conditioning efficiency lowers. Thus, a change in the height difference of the refrigerant system changes the operation time of the air conditioner 2 and affects the second initial estimation residual value of the outdoor unit 12.

When multiple indoor units 11 are connected to the outdoor unit 12 in the air conditioner 2, the installation condition of the outdoor unit 12 may include a maximum value of an indoor unit connection rate. The installation condition of the indoor unit 11 may include the indoor unit connection rate. The indoor unit connection rate indicates the sum of capacities of the indoor units 11 that are connected to the outdoor unit 12 for air conditioning with respect to the capacity of the outdoor unit 12. As the indoor unit connection rate increases, the load on the outdoor unit 12 increases. Hence, the maximum value of the indoor unit connection rate affects the residual value.

The calculating unit 23 may calculate the initial estimation residual value of the indoor unit 11 based on the first environment information, the lease initial operation condition of the indoor unit 11, and the lease initial installation condition of the indoor unit 11.

The installation condition of the indoor unit 11 includes a height difference of a refrigerant system. As the height difference of the refrigerant system increases, the air conditioning efficiency lowers. Thus, a change in the height difference of the refrigerant system changes the operation time of the air conditioner 2 and affects the first initial estimation residual value of the indoor unit 11

With reference to Fig. 3, an example of calculation of the initial estimation residual value of the outdoor unit 12 will now be described. The initial estimation residual value of the outdoor unit 12 is shown on the bottom of the fifth column from the left in Fig. 3.

The initial estimation residual value of the outdoor unit 12 is calculated based on reference data. The reference data includes a predetermined life, an ideal environment that minimizes deterioration of the air conditioner 2, an ideal installation condition that does not impose an excess load, and an ideal operation condition. The ideal operation condition is an operation condition that allows the air conditioner 2 to be operated until the end of the life without trouble when the air conditioner 2 is operated in the ideal environment and the ideal installation condition.

In the present embodiment, the life of the outdoor unit 12 is set to eight years.

In the ideal environment, the region is set to a plain region, the regional climate is set to a temperate climate, the altitude is set to a low altitude, the installation location is set to presence of shield, the outdoor air condition is set to temperature of 40°C and 70% humidity in summer and temperature of -2°C and 15% humidity in winter.

In the ideal installation condition, the height difference of the refrigerant system is set to small. In a system including multiple indoor units 11, the maximum value of the indoor unit connection rate is set to 80%.

In the ideal operation condition, the daily operation time range is set to from 8 o'clock to 20 o'clock, the number of days operated in a year is set to 200 days, the maximum load ratio is set to 80%, and the total operation time is set to 9600 hours.

The initial estimation residual value of the outdoor unit 12 is calculated based on a ratio determined based on comparison of the reference data with residual value calculation items. The residual value calculation items include the second environment information, which is the environment of the outdoor unit 12, an operation condition specified by contract, and the installation condition of the outdoor unit 12.

More specifically, the initial estimation residual value of the outdoor unit 12 is calculated as the product of a first ratio, a second ratio, and a third ratio. The first ratio is a ratio of each item in the second environment information to standard data of the environment. The second ratio is a ratio of each item in the operation condition to standard data of the operation condition. The third ratio is a ratio of each item in the installation condition to standard data of the installation condition. The first ratio, the second ratio, and the third ratio may be considered as a type of residual value of each item. The first ratio and the third ratio are set in advance. The second ratio is obtained by calculation.

The first ratio of each item in the second environment information is set in advance as a ratio to the standard data. For example, a coastal region is more prone to salt damage than a plain region. Therefore, the first ratio for the coastal region is set to 98%.

The second ratio of the operation condition is calculated as a ratio to the standard data. For example, when the total operation time of the outdoor unit 12 is 9600 hours in the reference data and a lease contract sets the total operation time to 4800 hours, the remaining operable time equals a value (hereafter, referred to as differential time) obtained by subtracting the lease contract total operation time (4800 hours) from the total operation time in the reference data. The second ratio is calculated to be 4800 hours (differential time)/9600 hours as the residual value. In this case, the second ratio is 50%.

The third ratio of the installation condition is set in advance as a ratio to the standard data. For example, when the height difference of the refrigerant system is medium, the air conditioning efficiency is lower than when the height difference of the refrigerant system is small. As a result, the operation time of the outdoor unit 12 may be increased, and thus the third ratio is set to 98%.

In the example shown in Fig. 3, the initial estimation residual value of the outdoor unit 12 is calculated by multiplying the first ratio, the second ratio, and the third ratio and is 48%. If the initial estimation residual value is calculated from only the total operation time, the initial estimation residual value will be 50%. In the present embodiment, since the second environment information and the installation condition are reflected, the initial estimation residual value of the outdoor unit 12 is less than 50%.

The initial estimation residual value of the indoor unit 11 may be calculated in the same manner as the outdoor unit 12. For the indoor unit 11, Fig. 4 shows a first ratio of the first environment information to standard data of the environment, a second ratio of the operation condition to standard data of the operation condition, and a third ratio of the installation condition to standard data of the installation condition. The initial estimation residual value of the indoor unit 11 is shown on the bottom of the fifth column from the left in Fig. 4. In the example shown in Fig. 4, the initial estimation residual value of the indoor unit 11 is 48%.

The initial estimation residual value of the air conditioner 2 is calculated as described above. More specifically, the calculating unit 23 calculates a sum of the product of the initial estimation residual value of the indoor unit 11 and the contribution rate of the indoor unit 11 and the product of the initial estimation residual value of the outdoor unit 12 and the contribution rate of the outdoor unit 12 as the initial estimation residual value of the air conditioner 2.

As shown in Fig. 5, in the present embodiment, the initial estimation residual value of the air conditioner 2 is calculated by 48%×50%+48%×50% and is 48%. The example of calculation of the initial estimation residual value may be applied to calculation of other residual values.

With reference to Fig. 6, a second calculating process of an initial estimation residual value will be described.

The obtaining unit 22 obtains first environment information and second environment information. The obtaining unit 22 obtains a lease initial operation condition of the indoor unit 11 and a lease initial operation condition of the outdoor unit 12. The obtaining unit 22 further obtains planned maintenance information related to maintenance of the air conditioner 2 planned to be performed during the lease.

In a lease contract, maintenance agreement may be made at the time of the contract. The maintenance agreement is an agreement related to maintenance performed during the lease. The maintenance agreement includes planned maintenance information related to planned maintenance. The planned maintenance information includes maintenance frequency and maintenance contents. Wear and deterioration of the air conditioner 2 will change depending on maintenance. Therefore, it is preferred that the planned maintenance information related to maintenance of the air conditioner 2 is reflected in calculation of the initial estimation residual value.

In an example, the maintenance contents include general maintenance and basic maintenance.

The general maintenance is generally performed on the components of the air conditioner 2. In an example, the general maintenance diagnoses anomalies using a dedicated anomaly detector. In an example of the general maintenance, an operator conducts an overload test of the compressor 17. When an anomaly is diagnosed, the anomaly is fixed. Expendable parts are periodically replaced. The basic maintenance is a simple visual examination performed on the components of the air conditioner 2. In an example, in the basic maintenance, an operator replaces worn components.

The planned maintenance information includes ratio information associated with a maintenance course including the maintenance contents and the maintenance frequency. The ratio information indicates a decrease rate of the residual value when the maintenance is properly and periodically performed.

The maintenance changes an advancing rate of wear and deterioration of the air conditioner 2. When the maintenance is properly and periodically performed, wear and deterioration of the air conditioner 2 are slow. This increases the residual value. Therefore, it is assumed that the air conditioner 2 will have a different residual value depending on the maintenance agreement made in the lease contract.

In an example, the calculating unit 23 calculates the initial estimation residual value of the air conditioner 2 at the end of the lease based on the first environment information, the second environment information, the lease initial operation condition of the indoor unit 11, the lease initial operation condition of the outdoor unit 12, and the planned maintenance information.

The initial estimation residual value of the air conditioner 2 is calculated as the product of an initial estimation residual value that is calculated by a predetermined calculation process and a fourth ratio related to maintenance. The predetermined calculation process includes the first calculating process described above.

The fourth ratio is set in advance as a ratio to standard maintenance data.

In the present embodiment, the standard maintenance includes general maintenance performed once a year and basic maintenance performed once a month. The ratio of the standard maintenance is 100%. Maintenance course A includes only general maintenance performed once a year. The ratio of maintenance course A to the standard maintenance is set to 90%. In the case of maintenance course A, in comparison with the standard maintenance, an initial expected residual value of the air conditioner 2 is 90% of the reference residual value. For example, when the initial expected residual value is calculated by the first calculating process as 48% and the maintenance of maintenance course A is planned to be performed instead of the standard maintenance, the initial expected residual value is calculated as 43%.

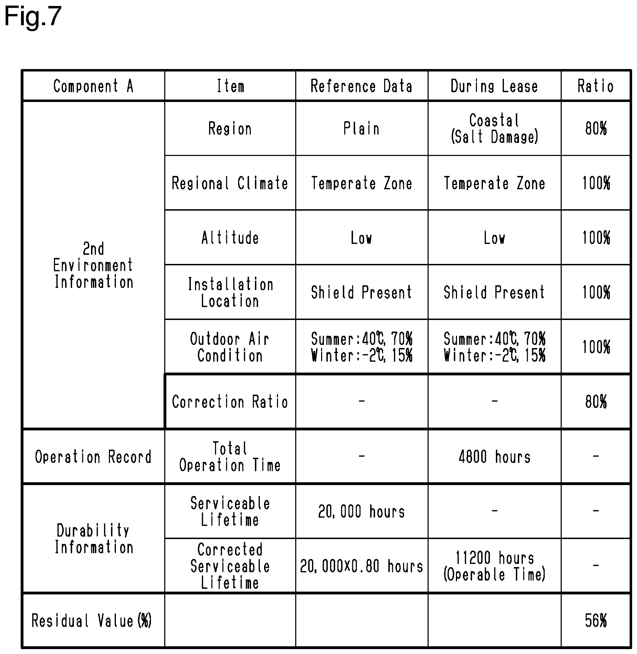

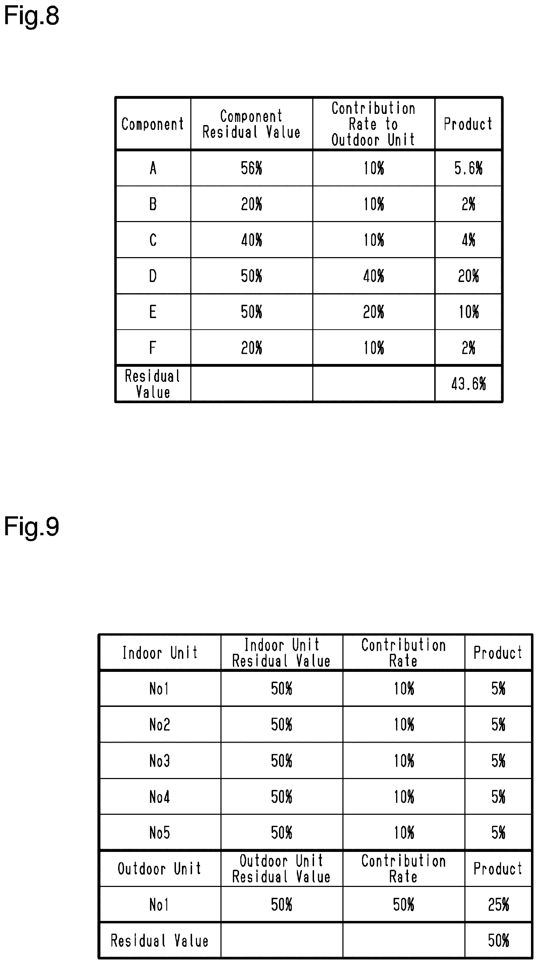

With reference to Figs. 7 and 8, a third calculating process of an initial estimation residual value will be described.

The obtaining unit 22 obtains first environment information and second environment information. The obtaining unit 22 obtains a lease initial operation condition of the indoor unit 11 and a lease initial operation condition of the outdoor unit 12. The obtaining unit 22 further obtains durability information of each component in the indoor unit 11 and durability information of each component in the outdoor unit 12.

Wear and deterioration of the air conditioner 2 change in accordance with the durability of each component of the air conditioner 2. The component includes at least the compressor 17, the indoor-side heat exchanger 14, the outdoor-side heat exchanger 16, and the electronic expansion valve 15. Other examples of the component include a frame, a rubber vibration damper, a fan, a fan belt, various electromagnetic valves, an anti-freezing heater, a drain pan, various sensors, an electrical equipment box, the refrigerant pipe 13, a drain pan, a drain pump, a float switch, and a filter. The durability refers to the durability of a component when used. The durability information includes serviceable lifetime. It is preferable that the durability information of each component is reflected in the calculation of the initial estimation residual value.

The calculating unit 23 calculates a residual value of the indoor unit 11 based on the durability information of each component in the indoor unit 11, the first environment information, and the lease initial operation condition of the indoor unit 11. The calculating unit 23 calculates a residual value of the outdoor unit 12 based on the durability information of each component in the outdoor unit 12, the second environment information, and the lease initial operation condition of the outdoor unit 12. The calculating unit 23 calculates an initial lease-end estimation residual value based on the residual value of each component in the indoor unit 11 and the residual value of each component in the outdoor unit 12.

The durability changes in accordance with the installation environment. For example, serviceable lifetime of a component changes in accordance with the environment. When the component contains metal and is used in a coastal region, the serviceable lifetime of the component shortens because metal is likely to deteriorate.

Therefore, it is preferred that the calculating unit 23 corrects the durability information of each component in the indoor unit 11 based on the first environment information. It is preferred that the calculating unit 23 corrects the durability information of each component in the outdoor unit 12 based on the second environment information.

With reference to Fig. 7, an example of calculation of the residual value of a component A in the outdoor unit 12 will now be described.

The initial estimation residual value of the component A is calculated based on an operation condition specified by contract, the durability information of the component A, and a correction ratio (correction coefficient) to the durability information.

More specifically, the calculating unit 23 calculates the operation time (estimated operation time) of the component A at the end of the lease from the operation condition. When the component A interlocks with operation of the air conditioner 2, the calculating unit 23 sets the estimated operation time to be equal to total operation time that is estimated from the operation condition.

The correction ratio to the durability information is set in advance as a ratio of each item in the second environment information to standard data. For example, a coastal region is more prone to salt damage than a plain region. Therefore, the correction ratio of the coastal region is set to 80% for the component A. The correction ratio has a different value for each component. For example, the correction ratio for a component having a high resistance to salt is defined as 100%. The correction ratio for a rubber component, which has a low resistance to salt, is set to a low value.

The correction ratio (correction coefficient) to the durability information may be set based on information other than the second environment information. Loads on a component may change in accordance with the installation condition of the air conditioner 2 and the operation information of the air conditioner 2 in addition to the environment of the component. Deterioration of a component may change in accordance with maintenance of the air conditioner 2. Therefore, the correction ratio (correction coefficient) may be set based on at least one of the second environment information, the installation condition, the operation information, or the maintenance information.

The value of the correction ratio (correction coefficient) may be set by machine learning. For example, the correction ratio may be obtained by inputting the second environment information and the life of the component into a trained model. The trained model is generated using the second environment information of the air conditioner 2, the life of the component, and the correction ratio as training data. The correction ratio serves as supervised data. In another example, the correction ratio is obtained by inputting the second environment information, the operation information, the maintenance information, and the life of the component into a trained model. The trained model is generated by using training data that includes the second environment information of the air conditioner 2, the operation information, the maintenance information, and the life of the component as input data and the correction ratio as supervised data.

It is preferred that durability information is corrected based on the correction ratio to the durability information. For example, when the durability information is the serviceable lifetime of the component A, the corrected value of the serviceable lifetime is defined by the product of the serviceable lifetime and the correction ratio. Thus, the serviceable lifetime is corrected based on the second environment information.

In the example shown in Fig. 7, each item in the second environment information at the time of a lease contract is the same as that in the reference data except for "region". The region is set to "costal". The correction ratio of the second environment information is defined as the product of all items in the second environment information. In the present embodiment, the correction ratio of the second environment information is calculated as 80%. In this case, the serviceable lifetime is corrected from 20000 hours to 16000 hours (refer to corrected serviceable lifetime in Fig. 8).

When the estimated operation time of the component A is 4800 hours, the remaining operable time has a value (differential time) obtained by subtracting 4800 hours from 16000 hours. The differential time is 11200 hours. The residual value of the component A is defined as the ratio of the differential time to the non-corrected serviceable lifetime. In this example, the residual value of the component A is 56%.

Fig. 8 is a table including the residual value of components and the contribution rate of the components. As shown in Fig. 8, for each component, the product of the residual value of the component and the contribution rate of the component is calculated. The initial estimation residual value of the outdoor unit 12 is defined as a sum of the products. The initial estimation residual value of the indoor unit 11 may be calculated through the same calculating process.

In an example, the calculating unit 23 uses the following information to calculate the initial estimation residual value of a component in the indoor unit 11 and the initial estimation residual value of a component in the outdoor unit 12.
(a) When calculating the initial estimation residual value of each component in the indoor unit 11 at the end of the lease, before the air conditioner 2 is used, the calculating unit 23 uses initial first environment information, an initial installation condition, planned operation information, and planned maintenance information.
(b) When calculating the initial estimation residual value of each component in the outdoor unit 12 at the end of the lease, before the air conditioner 2 is used, the calculating unit 23 uses initial second environment information, an initial installation condition, planned operation information, and planned maintenance information.

A fourth calculating process of an initial estimation residual value will now be described.

The fourth calculating process is a modified example of the third calculating process. The fourth calculating process is a process that reflects the planned maintenance information in the third calculating process.

The obtaining unit 22 obtains the first environment information, the second environment information, the lease initial operation condition of the indoor unit 11, the lease initial operation condition of the outdoor unit 12, the durability information of each component in the indoor unit 11, the durability information of each component in the outdoor unit 12, and the planned maintenance information related to maintenance of the air conditioner 2 that is planned to be performed during the lease.

The calculating unit 23 calculates a residual value of the indoor unit 11 based on the durability information of each component in the indoor unit 11, the first environment information, the lease initial operation condition of the indoor unit 11, and the planned maintenance information of the indoor unit 11. The calculating unit 23 calculates a residual value of the outdoor unit 12 based on the durability information of each component in the outdoor unit 12, the second environment information, the lease initial operation condition of the outdoor unit 12, and the planned maintenance information of the outdoor unit 12. The calculating unit 23 calculates an initial lease-end estimation residual value based on the residual value of the indoor unit 11 and the residual value of the outdoor unit 12. Preferably, the calculating unit 23 corrects the durability information of each component in the indoor unit 11 based on the first environment information and corrects the durability information of each component in the outdoor unit 12 based on the second environment information.

### Actual Estimation Residual Value Calculation Example

With reference to Figs. 3 to 5, calculation of the actual estimation residual value will be described.

Actual usage of the air conditioner 2 may greatly differ from the usage frequency planned at the time of a lease contract. The usage frequency of the air conditioner 2 may be changed by various factors, for example, when the usage frequency is increased due to extreme weather, the usage of a tenant room is changed due to a change in the tenant, the amount of sunlight is changed due to construction of a building, and the usage frequency is changed due to a change in electricity rate. At the end of the lease, if the residual value of the air conditioner 2 is greatly deviated from the initial estimation residual value, it is disadvantageous for the user and the leasing company. Therefore, it is preferred that the actual estimation residual value at the end of the lease is estimated during the lease.

With reference to Figs. 3 to 5, a first calculating process of an actual estimation residual value will be described.

The obtaining unit 22 obtains operation record information related to the operation record of the indoor unit 11 to a specific time in the lease period and operation record information related to the operation record of the outdoor unit 12 to a specific time in the lease period.

In an example, the obtaining unit 22 obtains the operation record information from the air conditioner 2 by the network N from the air conditioner 2. For example, the obtaining unit 22 periodically requests information from the air conditioner 2 to obtain the operation record information from the air conditioner 2. Alternatively, when the air conditioner 2 stores the operation record information in the management device 3, the obtaining unit 22 obtains the operation record information from the management device 3. An example of the operation record information is the accumulated operation time of the compressor 17 and the accumulated operation time of a fan in the indoor unit 11.

The calculating unit 23 calculates the actual estimation residual value of the air conditioner 2 at the end of the lease based on the first environment information, the second environment information, the operation record information of the indoor unit 11 to the specific time in the lease period, and the operation record information of the outdoor unit 12 to the specific time in the lease period as a residual value that is calculated during the lease.

The calculating unit 23 calculates the actual estimation residual value of the indoor unit 11 based on the ratio determined based on comparison of reference data with residual value calculation items. The residual value calculation items include the first environment information, which is the environment of the indoor unit 11, a lease-end estimation operation record that is estimated from the operation record, and the installation condition of the indoor unit 11. The calculating unit 23 calculates the lease-end estimation operation record by regression analysis of the operation record up to the point in time of the estimation.

More specifically, the actual estimation residual value of the indoor unit 11 is calculated as the product of a first ratio, a second ratio, and a third ratio. The first ratio is a ratio of each item in the first environment information to standard data of the environment. The second ratio is a ratio of each item in the estimation operation record to standard data of the operation condition. The third ratio is a ratio of each item in the installation condition to standard data of the installation condition.

The calculating unit 23 calculates the actual estimation residual value of the outdoor unit 12 based on the ratio determined based on comparison of reference data with residual value calculation items. The residual value calculation items include the second environment information, which is the environment of the outdoor unit 12, a lease-end estimation operation record that is estimated from the operation record, and the installation condition of the outdoor unit 12. The calculating unit 23 calculates the lease-end estimation operation record by regression analysis of the operation record up to the point in time of the estimation.

More specifically, the actual estimation residual value of the outdoor unit 12 is calculated as the product of a first ratio, a second ratio, and a third ratio. The first ratio is a ratio of each item in the second environment information to standard data of the environment. The second ratio is a ratio of each item in the estimation operation record to standard data of the operation condition. The third ratio is a ratio of each item in the installation condition to standard data of the installation condition.

The calculating unit 23 calculates a sum of the product of the actual estimation residual value of the indoor unit 11 and the contribution rate of the indoor unit 11 and the product of the actual estimation residual value of the outdoor unit 12 and the contribution rate of the outdoor unit 12 as the actual estimation residual value of the air conditioner 2.

A second calculating process of an actual estimation residual value will now be described.

Wear and deterioration of the air conditioner 2 will change depending on maintenance. Therefore, it is preferred that the maintenance information (maintenance history information) is reflected in calculation of the actual estimation residual value. The maintenance information (maintenance history information) is related to maintenance that is actually performed. The maintenance information (maintenance history information) is stored in the air conditioner 2 or the management device 3 by a maintenance operator.

The obtaining unit 22 obtains the maintenance information (maintenance history information) of the air conditioner 2 performed by a specific time in the lease period. In an example, the obtaining unit 22 obtains the maintenance information (maintenance history information) from the air conditioner 2 by the network N from the air conditioner 2. For example, the obtaining unit 22 periodically requests information from the air conditioner 2 and obtains the maintenance information (maintenance history information) from the air conditioner 2. Alternatively, when the maintenance operator stores the maintenance information (maintenance history information) in the management device 3, the obtaining unit 22 obtains the maintenance information (maintenance history information) from the management device 3.

The calculating unit 23 calculates the actual estimation residual value of the air conditioner 2 at the end of the lease based on the first environment information, the second environment information, the maintenance information (maintenance history information), the operation record information of the indoor unit 11 to the specific time in the lease period, and the operation record information of the outdoor unit 12 to the specific time in the lease period.

A third calculating process of an actual estimation residual value will now be described.

Wear and deterioration of the air conditioner 2 change in accordance with the durability of each component of the air conditioner 2. It is preferable that the durability information of each component is reflected in calculation of the actual estimation residual value.

The obtaining unit 22 further obtains durability information of each component in the indoor unit 11 and durability information of each component in the outdoor unit 12.

The calculating unit 23 calculates a residual value of the indoor unit 11 based on the first environment information of the indoor unit 11, the durability information of each component in the indoor unit 11, and the operation record information of the indoor unit 11 to the specific time in the lease period. The calculating unit 23 calculates a residual value of the outdoor unit 12 based on the second environment information of the outdoor unit 12, the durability information of each component in the outdoor unit 12, and the operation record information of the outdoor unit 12 to the specific time in the lease period. The calculating unit 23 calculates an actual estimation residual value of the air conditioner 2 at the end of the lease based on the residual value of the indoor unit 11 and the residual value of the outdoor unit 12.

The durability changes in accordance with the installation environment. For example, serviceable lifetime of a component changes in accordance with the environment. When the component contains metal and is used in a coastal region, the serviceable lifetime of the component shortens because metal is likely to deteriorate. Preferably, the calculating unit 23 corrects the durability information of each component in the indoor unit 11 based on the first environment information and corrects the durability information of each component in the outdoor unit 12 based on the second environment information. With this configuration, the durability information of each component in the indoor unit 11 is corrected in accordance with the installation environment of the indoor unit 11, and the durability information of each component in the outdoor unit 12 is corrected in accordance with the installation environment of the outdoor unit 12. Thus, the actual estimation residual value is accurately calculated in accordance with the installation environment.

In an example, the calculating unit 23 uses the following information to calculate the actual estimation residual value of a component in the indoor unit 11 and the actual estimation residual value of a component in the outdoor unit 12.
(a) When calculating the actual estimation residual value of each component in the indoor unit 11 at the end of the lease while the air conditioner 2 is being used, the calculating unit 23 uses actual first environment information, an actual installation condition, actual operation information, and actual maintenance information (maintenance history information).
(b) When calculating the actual estimation residual value of each component in the outdoor unit 12 at the end of the lease while the air conditioner 2 is being used, the calculating unit 23 uses actual second environment information, an actual installation condition, actual operation information, and actual maintenance information (maintenance history information).

A fourth calculating process of the actual estimation residual value will be described as a modified example of the third calculating process. The fourth calculating process is a process that reflects the maintenance information (maintenance history information) in each item used in the third calculating process.

The obtaining unit 22 further obtains durability information of each component in the indoor unit 11 and durability information of each component in the outdoor unit 12.

The calculating unit 23 calculates a residual value of the indoor unit 11 based on the first environment information of the indoor unit 11, the durability information of each component in the indoor unit 11, the operation record information of the indoor unit 11 to the specific time in the lease period, and the maintenance information (maintenance history information) of the indoor unit 11. The calculating unit 23 calculates a residual value of the outdoor unit 12 based on the second environment information of the outdoor unit 12, the durability information of each component in the outdoor unit 12, the operation record information of the outdoor unit 12 to the specific time in the lease period, and the maintenance information (maintenance history information) of the outdoor unit 12. The calculating unit 23 calculates an actual estimation residual value of the air conditioner 2 at the end of the lease based on the residual value of the indoor unit 11 and the residual value of the outdoor unit 12. Preferably, the calculating unit 23 corrects the durability information of each component in the indoor unit 11 based on the first environment information and corrects the durability information of each component in the outdoor unit 12 based on the second environment information.

### Operation

The operation of the lease residual value calculation system 1 of the present embodiment will now be described.

Wear and deterioration of the air conditioner 2 are affected by the environment in which the indoor unit 11 is installed and the environment in which the outdoor unit 12 is installed. Therefore, if wear and deterioration of the indoor unit 11 and wear and deterioration of the outdoor unit 12 are evaluated by the same reference, the residual value of the air conditioner 2 may not be accurately estimated. In this regard, the calculating unit 23 calculates a residual value at the end of the lease based on the first environment information and the second environment information. Thus, the residual value is appropriately calculated in accordance with the environment.

### The advantages of the lease residual value calculation system 1 of the present embodiment will now be described.

(1) The lease residual value calculation system 1 includes the management device 3. The management device 3 includes the obtaining unit 22 and the calculating unit 23. The obtaining unit 22 obtains the first environment information related to the installation environment of the indoor unit 11 and the second environment information related to the installation environment of the outdoor unit 12. For a residual value after use over the set period, the calculating unit 23 calculates at least one of the initial estimation residual value or the actual estimation residual value, which is based on actual use, based on the first environment information and the second environment information.

The indoor unit 11 and the outdoor unit 12 of the air conditioner 2 are installed in different environments. For example, the indoor unit 11 is installed in various environments such as an office, a restaurant, and a gym. The outdoor unit 12 is installed outdoors. The outdoor environment varies depending on the region where the air conditioner 2 is installed. Thus, the indoor unit 11 and the outdoor unit 12 are used in different and various environments. In this regard, with the configuration described above, the residual value is calculated based on the first environment information related to the installation environment of the indoor unit 11 and the second environment information related to the installation environment of the outdoor unit 12, so that the calculation of the residual value reflects the effect of the environments. Thus, the residual value is accurately calculated.

(2) The management device 3 may be configured to manage the air conditioner 2 that is rented. In such a lease residual value calculation system 1, the above-described advantage (1) is obtained.

(3) The air conditioner 2 includes one or more indoor units 11 and one or more outdoor units 12. The obtaining unit 22 obtains the contribution rate of the indoor unit 11 and the contribution rate of the outdoor unit 12 to the air conditioner 2. The calculating unit 23 calculates a residual value of each indoor unit 11 after use over the set period based on the first environment information. The calculating unit 23 calculates a residual value of each outdoor unit 12 after use over the set period based on at least the second environment information. The calculating unit 23 further calculates a residual value of the air conditioner 2 based on the contribution rate of the indoor unit 11, the contribution rate of the outdoor unit 12, the residual value of the indoor unit 11, and the residual value of the outdoor unit 12.

With this configuration, when a system includes multiple indoor units 11 and multiple outdoor units 12, calculation of a residual value reflects the contribution rate of each indoor unit 11 and the contribution rate of each outdoor unit 12 to the air conditioner 2. Thus, the residual value of the air conditioner 2 is accurately calculated.

(4) The calculating unit 23 performs at least one of (a) or (b) described below. (a) The calculating unit 23 calculates a residual value of the indoor unit 11 after use over the set period based on the residual value of each component in the indoor unit 11 after use over the set period and the contribution rate of each component to the indoor unit 11. (b) The calculating unit 23 calculates a residual value of the outdoor unit 12 after use over the set period based on the residual value of each component in the outdoor unit 12 after use over the set period and the contribution rate of each component to the outdoor unit 12.

With this configuration, calculation of the residual value of the indoor unit 11 reflects the residual value of each component and the contribution rate of each component to the indoor unit 11. Also, calculation of the residual value of the outdoor unit 12 reflects the residual value of each component and the contribution rate of each component to the outdoor unit 12. Thus, the residual value of the air conditioner 2 is accurately calculated.

(5) Preferably, the obtaining unit 22 further obtains durability information of each component in the indoor unit 11 and durability information of each component in the outdoor unit 12.

The calculating unit 23 calculates a residual value of each component in the indoor unit 11 after use over the set period based on at least the durability information of the component in the indoor unit 11 and the first environment information. The calculating unit 23 calculates a residual value of each component in the outdoor unit 12 after use over the set period based on at least the durability information of the component in the outdoor unit 12 and the second environment information. In addition, the calculating unit 23 corrects the durability information of each component in the indoor unit 11 using a correction coefficient that is based on at least one of the first environment information, the installation condition, the operation information, or the maintenance information. The calculating unit 23 corrects the durability information of each component in the outdoor unit 12 using a correction coefficient that is based on at least one of the second environment information, the installation condition, the operation information, or the maintenance information.

With this configuration, calculation of the residual value of each component in the indoor unit 11 reflects the durability information of the component and the first environment information. Also, calculation of the residual value of each component in the outdoor unit 12 reflects the durability information of the component and the second environment information. In addition, the durability information of each component in the indoor unit 11 is corrected with the correction coefficient based on at least one of the first environment information, the installation condition, the operation information, or the maintenance information. The durability information of each component in the outdoor unit 12 is corrected with the correction coefficient based on at least one of the second environment information, the installation condition, the operation information, or the maintenance information. Since the durability information is corrected based on the environment information and the like, the residual value of the air conditioner 2 is accurately calculated.

(6) The value of the correction coefficient may be learned by machine learning. With this configuration, the correction coefficients are optimized by machine learning. Thus, the residual value of the air conditioner 2 is accurately calculated.

(7) Before use, when calculating the initial estimation residual value of each component in the indoor unit 11 after use over the set period and the initial estimation residual value of each component in the outdoor unit 12 after use over the set period, the calculating unit 23 uses the initial first environment information, the initial second environment information, the initial installation condition, the planned operation information, and the planned maintenance information. During use, when calculating the actual estimation residual value of each component in the indoor unit 11 after use over the set period and the actual estimation residual value of each component in the outdoor unit 12 after use over the set period, the calculating unit 23 uses the actual first environment information, the actual second environment information, the actual installation condition, the actual operation information, and the actual maintenance information.

This configuration has the advantages (a) and (b) described below.
(a) The initial estimation residual value of each component in the indoor unit 11 and each component in the outdoor unit 12 is calculated using the initial first environment information, the initial second environment information, the initial installation condition, the initial operation condition, and the planned maintenance information. Thus, the initial estimation residual value of each component is accurately calculated.
(b) The actual estimation residual value of each component in the indoor unit 11 and each component in the outdoor unit 12 is calculated using the actual first environment information, the actual second environment information, the actual installation condition, the actual operation information, and the actual maintenance information. Thus, the actual estimation residual value of each component is accurately calculated.

(8) The calculating unit 23 of the lease residual value calculation system 1 calculates a lease-end residual value based on the first environment information and the second environment information.

The indoor unit 11 and the outdoor unit 12 of the air conditioner 2 are installed in different environments. For example, the indoor unit 11 is installed in various environments such as an office, a restaurant, and a gym. The outdoor unit 12 is installed outdoors. The outdoor environment varies depending on the region where the air conditioner 2 is installed. Thus, the indoor unit 11 and the outdoor unit 12 are used in different and various environments. In this regard, with the configuration described above, the residual value is calculated based on the first environment information related to the installation environment of the indoor unit 11 and the second environment information related to the installation environment of the outdoor unit 12, so that the calculation of the residual value reflects the effect of the environments. Thus, the residual value is accurately calculated.

(9) The calculating unit 23 may calculate the initial estimation residual value as follows.

The calculating unit 23 calculates the initial estimation residual value based on the first environment information, the second environment information, the lease initial operation condition of the indoor unit 11, and the lease initial operation condition of the outdoor unit 12. This configuration accurately calculates the initial estimation residual value.

(10) The calculating unit 23 may calculate the initial estimation residual value as follows. The calculating unit 23 calculates the initial estimation residual value based on the first environment information, the second environment information, the lease initial operation condition of the indoor unit 11, the lease initial operation condition of the outdoor unit 12, and the planned maintenance information. With this configuration, the calculation of the initial estimation residual value further reflects the planned maintenance information. Thus, the initial estimation residual value is accurately calculated.

(11) The calculating unit 23 further uses the durability information to calculate the initial estimation residual value. With this configuration, the calculation of the initial estimation residual value further reflects the durability information. Thus, the initial estimation residual value is accurately calculated.

(12) The calculating unit 23 further uses the durability information of components and the planned maintenance information to calculate the initial estimation residual value. This configuration reflects the planned maintenance information and the durability information of components, so that the initial estimation residual value is accurately calculated.

It is preferred that the calculating unit 23 corrects the durability information of each component in the indoor unit 11 based on the first environment information. The calculating unit 23 corrects the durability information of each component in the outdoor unit 12 based on the second environment information. With this configuration, the durability information of each component in the indoor unit 11 is corrected in accordance with the installation environment of the indoor unit, and the durability information of each component in the outdoor unit 12 is corrected in accordance with the installation environment of the outdoor unit. Thus, the initial estimation residual value is accurately calculated.

(13) The calculating unit 23 may calculate the actual estimation residual value as follows.

The calculating unit 23 calculates the actual estimation residual value based on the first environment information, the second environment information, the operation record information of the indoor unit 11 to the specific time in the lease period, and the operation record information of the outdoor unit 12 to the specific time in the lease period.

This configuration calculates the initial estimation residual value based on the first environment information, the second environment information, the operation record information of the indoor unit 11, and the operation record information of the outdoor unit 12. Thus, the actual estimation residual value reflects the actual use and is accurately calculated.

(14) The calculating unit 23 may calculate the actual estimation residual value as follows. The calculating unit 23 calculates the actual estimation residual value based on the first environment information, the second environment information, the maintenance information, the operation record information of the indoor unit 11 to the specific time in the lease period, and the operation record information of the outdoor unit 12 to the specific time in the lease period. With this configuration, the calculation of the actual estimation residual value further reflects the maintenance information. Thus, the actual estimation residual value is accurately calculated.

(15) The calculating unit 23 further includes the durability information of components to calculate the actual estimation residual value. With this configuration, the calculation of the actual estimation residual value further reflects the durability information of the components. Thus, the actual estimation residual value is accurately calculated.

(16) The calculating unit 23 further uses the maintenance information and the durability information of components to calculate the actual estimation residual value. With this configuration, the calculation of the actual estimation residual value further reflects the maintenance information and the durability information of components. Thus, the actual estimation residual value is accurately calculated.

(17) Preferably, the calculating unit 23 corrects the durability information of each component in the indoor unit 11 based on the first environment information and corrects the durability information of each component in the outdoor unit 12 based on the second environment information. With this configuration, the durability information of each component in the indoor unit 11 is corrected in accordance with the installation environment of the indoor unit 11, and the durability information of each component in the outdoor unit 12 is corrected in accordance with the installation environment of the outdoor unit 12. Thus, the actual estimation residual value is accurately calculated in accordance with the installation environment.

### Second Embodiment of Residual Value Calculation System

A second embodiment of a lease residual value calculation system 1 will now be described. The lease residual value calculation system 1 manages an air conditioner 2 that includes one or more indoor units 11 and one or more outdoor units 12. The same reference signs are given to those components that are the same as the corresponding components of the first embodiment. Such components will not be described in detail.

The initial estimation residual value of the air conditioner 2 including multiple indoor units 11 will now be described. The obtaining unit 22 obtains the contribution rate of each indoor unit 11 and the contribution rate of the outdoor unit 12 to the air conditioner 2. The contribution rate is set in advance. The contribution rate of each indoor unit 11 may be specified by the ratio of the capacity of the indoor unit 11. The contribution rate of each outdoor unit 12 may be specified by the ratio of the capacity of the outdoor unit 12.

The calculating unit 23 calculates a residual value of each indoor unit 11 at the end of the lease based on the first environment information and the lease initial operation condition of the indoor unit 11. The residual value of the indoor unit 11 is calculated based on the calculation process of the first embodiment.

The calculating unit 23 calculates a residual value of each outdoor unit 12 at the end of the lease based on the second environment information and the lease initial operation condition of the outdoor unit 12. The residual value of the outdoor unit 12 is calculated based on the calculation process of the first embodiment.

Fig. 9 shows an example of the contribution rates. The calculating unit 23 calculates the initial estimation residual value of the air conditioner 2 based on the contribution rate of each indoor unit 11, the contribution rate of each outdoor unit 12, the residual value of the indoor unit 11, and the residual value of the outdoor unit 12.

With this configuration, when a system includes one or more indoor units 11 and one or more outdoor units 12, calculation of the initial estimation residual value reflects the contribution rate of the indoor unit 11 and the contribution rate of the outdoor unit 12 to the air conditioner 2. Thus, the initial estimation residual value is accurately calculated.

The calculation of an actual estimation residual value will now be described.

The obtaining unit 22 obtains the contribution rate of each indoor unit 11 and the contribution rate of the outdoor unit 12 to the air conditioner 2.

The calculating unit 23 calculates a residual value of each indoor unit 11 based on at least the first environment information and the operation record information of the indoor unit 11 to the specific time in the lease period. The residual value of the indoor unit 11 is calculated based on the calculation process of the first embodiment.

The calculating unit 23 calculates a residual value of each outdoor unit 12 based on at least the second environment information and the operation record information of the outdoor unit 12 to the specific time in the lease period. The residual value of the outdoor unit 12 is calculated based on the calculation process of the first embodiment.

The calculating unit 23 calculates an actual estimation residual value of the air conditioner 2 based on the contribution rate of the outdoor unit 12, the contribution rate of the outdoor unit 12, the residual value of the indoor unit 11, and the residual value of the outdoor unit 12.

With this configuration, when a system includes one or more indoor units 11 and one or more outdoor units 12, calculation of the actual estimation residual value reflects the contribution rate of each indoor unit 11 and the contribution rate of each outdoor unit 12 to the air conditioner 2. Thus, the actual estimation residual value is accurately calculated.

### Modified Example of Residual Value Calculation System

In addition to the embodiments described above, the lease residual value calculation system 1 according to the present invention is applicable to, for example, modified examples that are described below and combinations of at least two of the modified examples that do not contradict each other.

The lease residual value calculation system 1 may calculate an initial expected residual value based on the first environment information and the second environment information. For example, when the operation condition is the same as the reference data, the calculating unit 23 calculates the initial expected residual value at the end of the lease based on the first environment information and the second environment information.

### Assistance System, which does not form part of the present invention

The assistant system, which does not form part of the present invention, executes various processes so that an air conditioner is appropriately used. For example, the assistance system, which does not form part of the present invention, executes various processes so that an air conditioner is appropriately used when the air conditioner is rented on the conditions of a usage environment and usage condition that are set in advance. The air conditioner may be rented by a lease or subscription. An assistance system for an air conditioner that is rented by a lease (hereafter, referred to as "lease assistance system 10") will be described as an example of an assistance system, which does not form part of the present invention. In the following embodiments, the set period corresponds to a lease period. The "after use over a set period" corresponds to an end of a lease.

JP 2015 141600 A discloses a technique related to a lease assistance system. In the technique disclosed in JP 2015 141600 A, a lease residual value setting price of a vehicle is calculated based on a distance traveled, maintenance and repair record information, and the like.

After a lease is contracted, operation of the air conditioner is entrusted to a user. When the user operates the air conditioner with a higher load than the operation condition that is set in the lease contract, the residual value of the air conditioner will become lower than planned. When the user operates the air conditioner with a lower load than the operation condition set in the lease contract, the residual value of the air conditioner will become higher than planned. Thus, the actual residual value is deviated from the planned residual value depending on the way the user operates. Such deviation occurs due to various factors other than the way the user operates. An increase in the deviation of the residual value increases the amount of payment adjustment. It is preferred for an air conditioner that is used under a lease contract that deviation of an actual residual value from an expected residual value is minimized. An overview of the assistance system, which does not form part of the present invention, will be described below.

A lease assistance system for an air conditioner includes a management device that manages the air conditioner. In the lease assistance system, the management device includes a processor. When an actual estimation residual value (second residual value) of the air conditioner at the end of the lease based on an operation record of the air conditioner is predicted to deviate from an initial estimation residual value (first residual value) of the air conditioner at the end of the lease that is planned at the beginning of the lease, the processor executes at least one of outputting deviation information or a signal related to the deviation to a predetermined device or changing a control setting variable of the air conditioner so as to minimize the deviation at the end of the lease based on the deviation information.

With this configuration, when the lease-end residual value is predicted to deviate from the planned residual value, the predetermined process is executed during the lease. This minimizes the deviation of the residual value from the planned residual value.

In the lease assistance system for an air conditioner, the control setting variable includes at least one of an operating mode of the air conditioner, a set temperature for room temperature, a setting state of a thermostat, airflow of the indoor unit, an air direction of the indoor unit, activation and deactivation times of the air conditioner, an evaporation temperature, a condensation temperature, or a capacity value of an operational component of the air conditioner. With this configuration, the operation of the air conditioner is changed by at least one of the control setting variables.

In the lease assistance system for an air conditioner, when the actual estimation residual value (second residual value) is predicted to be less than the initial estimation residual value (first residual value), the processor provides the predetermined device with first recommendation information that recommends a change in the control setting variable of the air conditioner based on the operation record. With this configuration, the control setting variable is more likely to be changed, so that the actual estimation residual value (second residual value) approaches the initial estimation residual value (first residual value).

In the lease assistance system for an air conditioner, when the actual estimation residual value (second residual value) is predicted to be less than the initial estimation residual value (first residual value), the processor provides the predetermined device with second recommendation information that recommends a maintenance task based on the operation record. With this configuration, the maintenance task is more likely to be performed on the air conditioner, so that the actual estimation residual value (second residual value) approaches the initial estimation residual value (first residual value).

In the lease assistance system for an air conditioner, the air conditioner includes multiple indoor units. The processor compares the initial estimation residual value (first residual value) and the actual estimation residual value (second residual value) of the air conditioner and operates, based on the result of the comparison, the indoor units in order of priority from those having a higher residual value that is based on the operation record.

This configuration allows for equalization of the residual values of the indoor units. The equalization of the residual values of the indoor units avoids a large deviation of the residual value of a particular indoor unit from the planned residual value.

In the lease assistance system for an air conditioner, the air conditioner includes multiple indoor units. The processor compares the initial estimation residual value (first residual value) and the actual estimation residual value (second residual value) of the air conditioner and operates the indoor units so that the residual values of the indoor units are equal to each other based on the result of the comparison.

This configuration allows for equalization of the residual values of the indoor units. The equalization of the residual values of the indoor units avoids a large deviation of the residual value of a particular indoor unit from the planned residual value.

In the lease assistance system for an air conditioner, the air conditioner includes multiple indoor units. The processor compares the initial estimation residual value (first residual value) and the actual estimation residual value (second residual value) of the air conditioner and, based on the result of the comparison, provides a predetermined terminal with recommended action information that recommends to operate the indoor units in order of priority from those having a higher residual value that is based on the operation record. This configuration notifies the user of the priority order of using the indoor units to equalize the residual values of the indoor units.

In the lease assistance system for an air conditioner, the air conditioner includes multiple outdoor units. The processor compares the initial estimation residual value (first residual value) and the actual estimation residual value (second residual value) of the air conditioner and operates, based on the result of the comparison, the outdoor units in order of priority from those having a higher residual value based on the operation record.

This configuration allows for equalization of the residual values of the outdoor units. The equalization of the residual values of the outdoor units avoids a large deviation of the residual value of a particular outdoor unit from the planned residual value.

In the lease assistance system for an air conditioner, the air conditioner includes multiple outdoor units. The processor compares the initial estimation residual value (first residual value) and the actual estimation residual value (second residual value) of the air conditioner and operates the outdoor units so that the residual values of the outdoor units are equal to each other based on the result of the comparison.

This configuration allows for equalization of the residual values of the outdoor units. The equalization of the residual values of the outdoor units avoids a large deviation of the residual value of a particular outdoor unit from the planned residual value.

In the lease assistance system for an air conditioner, the processor compares the initial estimation residual value (first residual value) and the actual estimation residual value (second residual value) of the air conditioner. Based on the result of the comparison, the processor specifies, from the operation records, an item in the operation condition of the indoor unit and the operation condition of the outdoor unit that was different from an operation condition at the beginning of the lease, and provides the specified item to the predetermined terminal.

This configuration provides a notification that the past operation is deviated from the operation condition, thereby prompting reconsideration of the operation to minimize the deviation of the residual value of the indoor unit and the residual value of the outdoor unit from the planned residual value.

In the lease assistance system for an air conditioner, the management device includes a calculating unit that calculates at least the actual estimation residual value (second residual value) among the initial estimation residual value (first residual value) and the actual estimation residual value (second residual value). The calculating unit obtains the operation record of the air conditioner in a specified time in the lease period, and calculates the actual estimation residual value (second residual value) of the air conditioner at the end of the lease based on the actual operation. This configuration uses the operation record of the air conditioner to calculate the actual estimation residual value (second residual value). Thus, the actual estimation residual value (second residual value) is accurately calculated.

In the lease assistance system for an air conditioner, the calculating unit further obtains environment information related to the installation location of the air conditioner and calculates the actual estimation residual value (second residual value) of the air conditioner at the end of the lease based on the environment information and the operation record of the air conditioner. This configuration uses the environment information and the operation record of the air conditioner to calculate the actual estimation residual value (second residual value). Thus, the actual estimation residual value (second residual value) is accurately calculated.

In the lease assistance system for an air conditioner, the calculating unit further obtains maintenance history information of the air conditioner and calculates the actual estimation residual value (second residual value) of the air conditioner at the end of the lease based on the maintenance history information and the operation record of the air conditioner. This configuration uses the maintenance history information and the operation record of the air conditioner to calculate the actual estimation residual value (second residual value). Thus, the actual estimation residual value (second residual value) is accurately calculated.

In the lease assistance system for an air conditioner, the calculating unit further obtains maintenance history information of the air conditioner and the actual estimation residual value (second residual value) of the air conditioner at the end of the lease based on the maintenance history information, the environment information, and the operation record of the air conditioner. This configuration uses the maintenance history information, the environment information of the air conditioner, and the operation record to calculate the actual estimation residual value (second residual value). Thus, the actual estimation residual value (second residual value) is accurately calculated.

In the lease assistance system for an air conditioner, the calculating unit calculates the initial estimation residual value (first residual value) of the air conditioner at the end of the lease based on the initial operation condition of the air conditioner that is set in advance at the beginning of the lease. This configuration uses the initial operation condition of the air conditioner to calculate the initial estimation residual value (first residual value). Thus, the initial estimation residual value (first residual value) is accurately calculated.

In the lease assistance system for an air conditioner, the calculating unit further obtains environment information related to the installation location of the air conditioner and calculates the initial estimation residual value (first residual value) of the air conditioner at the end of the lease based on the environment information and the initial operation condition of the air conditioner. This configuration uses the environment information and the initial operation condition of the air conditioner to calculate the initial estimation residual value (first residual value). Thus, the initial estimation residual value (first residual value) is accurately calculated.

In the lease assistance system for an air conditioner, the calculating unit further obtains planned maintenance information that is set in advance for the air conditioner and calculates the initial estimation residual value (first residual value) of the air conditioner at the end of the lease based on the planned maintenance information and the initial operation condition of the air conditioner. This configuration uses the planned maintenance information and the initial operation condition of the air conditioner to calculate the initial estimation residual value (first residual value). Thus, the initial estimation residual value (first residual value) is accurately calculated.

In the lease assistance system for an air conditioner, the calculating unit further obtains planned maintenance information that is set in advance for the air conditioner and calculates the initial estimation residual value (first residual value) of the air conditioner at the end of the lease based on the planned maintenance information, the environment information, and the initial operation condition of the air conditioner. This configuration uses the planned maintenance information, the environment information, and the initial operation condition of the air conditioner to calculate the initial estimation residual value (first residual value). Thus, the initial estimation residual value (first residual value) is accurately calculated.

In the lease assistance system for an air conditioner, the calculating unit obtains durability information of each component in the air conditioner, calculates a first component residual value of the component at the end of the lease based on the durability information of the component and the operation condition, calculates a multiplication value obtained by multiplying the first component residual value and the contribution rate of the component to the air conditioner, and adds the multiplication values of the components, to obtain the initial estimation residual value (first residual value) of the air conditioner at the end of the lease. With this configuration, the first component residual value of each component is obtained from the durability information of the component and the operation condition, and the residual value of the air conditioner is obtained from the first component residual values of the components. Thus, the initial estimation residual value (first residual value) is accurately calculated.

In the lease assistance system for an air conditioner, the calculating unit obtains durability information of each component in the air conditioner and a component usage record of each component in the air conditioner, which is used as an operation record of the air conditioner in a specified time in the lease period. The calculating unit calculates a second component residual value of each component at the end of the lease based on the durability information and the component usage record of the component, calculates a multiplication value by multiplying the second component residual value and the contribution rate of the component to the air conditioner, and adds the multiplication values of the components to obtain the actual estimation residual value (second residual value) of the air conditioner at the end of the lease.

With this configuration, the second component residual value of each component is obtained from the durability information and the component usage record of the component, and the residual value of the air conditioner is obtained from the second component residual values of the components. Thus, the actual estimation residual value (second residual value) is accurately calculated.

### First Embodiment of Assistance System, which does not form part of the present invention

The lease assistance system for an air conditioner, which does not form part of the present invention, will be described below.

The lease assistance system 10, which does not form part of the present invention, for the air conditioner 2 manages the residual value of the air conditioner 2, which is subject to a lease, and executes a predetermined process when an estimated residual value (hereafter, referred to as "the actual estimation residual value (second residual value)") is predicted to deviate from the initially planned residual value (hereafter, referred to as "the initial estimation residual value (first residual value)"). The present embodiment, which does not form part of the present invention, will be described below.

The residual value of the air conditioner 2 refers to a remaining value obtained by subtracting a value depreciated by the use of the air conditioner 2 from an initial usage value set in advance for the air conditioner 2. In an example, the initial usage value is defined as 100. The value of an air conditioner 2 that is not usable due to wear is defined as 0. The residual value is expressed as percentage.

The initial estimation residual value of the air conditioner 2, which is subject to a lease, is a lease-end residual value that is set at the beginning of the lease. The actual estimation residual value of the air conditioner 2, which is subject to a lease, is a lease-end residual value that is estimated during the lease.

In the present embodiment, which does not form part of the present invention, the lease assistance system 10 predicts deviation of the actual estimation residual value from the initial estimation residual value. In an example, the lease assistance system 10 calculates an actual estimation residual value and predicts deviation based on the initial estimation residual value and the actual estimation residual value. In another example, the lease assistance system 10 does not calculate an actual estimation residual value and predicts the deviation based on actual use.

The lease assistance system 10 may calculate an initial estimation residual value and present the initial estimation residual value to a lease contractor as an estimation of the residual value of the air conditioner 2 at the time of an initial contract. Presentation of the initial estimation residual value allows the lease contractor to determine the validity of a lease price. The lease assistance system 10 may calculate the actual estimation residual value during the lease and present the actual estimation residual value to the lease contractor or the user of the air conditioner 2. Presentation of the actual estimation residual value allows for acknowledgement of the present usage state with respect to a future residual value of the air conditioner 2.

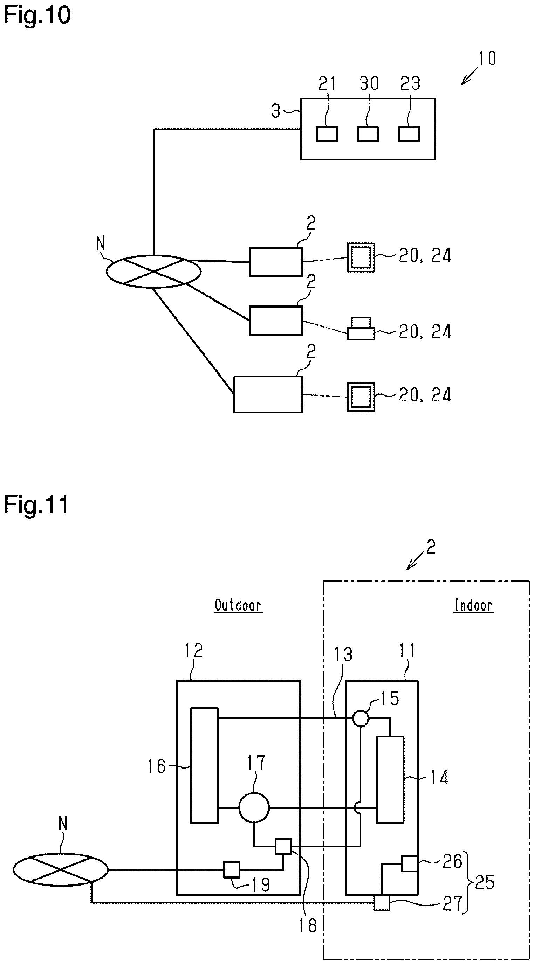

As shown in Fig. 10, the lease assistance system 10, which does not form part of the present invention, includes a management device 3. The management device 3 manages an air conditioner 2.

The management device 3 manages one or more air conditioners 2 having a lease setting. Lease refers to "operating lease". The air conditioner 2 having a lease setting is rented to a user. During the lease, the user is allowed to use the air conditioner 2.

A lease contract specifies a lease period and a lease-end residual value (hereafter, referred to as "the initial estimation residual value"). The lease price is set based on a value obtained by subtracting the initial lease-end estimation residual value of the air conditioner 2 from the initial value of the air conditioner 2 that is set at the beginning of the lease.

With reference to Fig. 11, the air conditioner 2 managed by the management device 3 will be described.

The air conditioner 2 is a subject property of a lease contract. The air conditioner 2 is configured to communicate with the management device 3. The air conditioner 2 is configured to transmit an operation record of the air conditioner 2 to the management device 3. An example of the air conditioner 2 will be described below.

The air conditioner 2 includes an indoor unit 11 and an outdoor unit 12. The air conditioner 2 may include a refrigerant pipe 13 connecting the indoor unit 11 and the outdoor unit 12. The indoor unit 11 includes an indoor-side heat exchanger 14 and an electronic expansion valve 15 that expands a refrigerant. The outdoor unit 12 includes an outdoor-side heat exchanger 16, a compressor 17 that compresses the refrigerant, a controller 18, and a communication unit 19. The refrigerant pipe 13 has a structure of a closed circuit including the indoor-side heat exchanger 14 and the outdoor-side heat exchanger 16. The communication unit 19 communicates with the management device 3.

The air conditioner 2 changes operation in accordance with the setting of a control setting variable.

The control setting variable includes at least one of an operating mode of the air conditioner 2, a set temperature for room temperature, a setting state of a thermostat, airflow of the indoor unit 11, an air direction of the indoor unit 11, activation and deactivation times of the air conditioner 2, an evaporation temperature, a condensation temperature, or a capacity value of an operational component of the air conditioner 2.

The operating mode includes a normal operation and a power saving operation. The set temperature for room temperature is a target room temperature of the air conditioning control. The thermostat setting refers to setting of an operation temperature that switches the thermostat. The activation and deactivation times of the air conditioner 2 refer to an operation start time and an operation end time of the air conditioner 2 when operated in accordance with preset schedule. The evaporation temperature refers to the evaporation temperature of the refrigerant in a heat exchanger serving as an evaporator. The evaporation temperature may be temperature of the heat exchanger serving as an evaporator. The condensation temperature refers to the condensation temperature of the refrigerant in a heat exchanger serving as a condenser. The condensation temperature may be temperature of the heat exchanger serving as a condenser. The operational component of the air conditioner 2 includes the compressor 17, a heat exchanger, and a fan.

The operating mode, the set temperature, the airflow of the indoor unit 11, and the air direction are changed using an operating device (referred to as a remote controller) of the air conditioner 2. The setting state of the thermostat and the activation and deactivation times of the air conditioner 2 are changed in accordance with correction of setting information stored in the controller 18. The evaporation temperature is changed in accordance with a change in a target evaporation temperature stored in the controller 18. The evaporation temperature is changed in accordance with a change in a target condensation temperature stored in the controller 18. The capacity value of an operational component in the air conditioner 2 is changeable by operational restriction. When the operational component is a heat exchanger, the capacity of the heat exchanger will be changed when the passage through which the refrigerant flows is partially closed. When the operational component is the compressor 17, the capacity will be changed when limitation is imposed on the upper limit of actuation frequencies. When the operational component is a fan, the capacity will be changed when the fan motor is controlled.

The controller 18 of the air conditioner 2 collects operation records related to operation of the air conditioner 2. The operation records include an accumulated operation time of the compressor 17, an accumulated activation-deactivation frequency of the compressor 17, an activation-deactivation frequency of the compressor 17 per unit time, and an accumulated operation time of the indoor unit 11. The communication unit 19 of the air conditioner 2 transmits the operation records of the air conditioner 2 to the management device 3 periodically or in response to a request instruction from the management device 3.

### With reference to Fig. 10, the management device 3 will be described.

The management device 3 may be directly connected to the air conditioner 2. The management device 3 may be connected to the air conditioner 2 by a network N. The network N includes at least one of a local network or the Internet. In the present embodiment, the management device 3 is connected to the air conditioner 2 by the network N.

The management device 3 manages a predetermined device 20 in addition to the air conditioner 2. The predetermined device 20 communicates with the management device 3. The communication includes unidirectional and bidirectional communications. Examples of the predetermined device 20 include an information terminal 24 and a notification device 25. The predetermined device 20 has identification information for communication. The identification information includes an address unique to the predetermined device 20 for communication. The management device 3 stores at least the identification information of the predetermined device 20.

The management device 3 associates the predetermined device 20, as a receiver of information related to the air conditioner 2, with the air conditioner 2. Two or more predetermined devices 20 may be associated with a single air conditioner 2. The management device 3 stores the air conditioner 2 in association with the predetermined devices 20. The management device 3 transmits information calculated for the air conditioner 2 to the predetermined device 20 that is associated with the air conditioner 2. In an example, in response to a request, the management device 3 transmits information related to deviation of the actual estimation residual value from the initial estimation residual value, which is calculated by the management device 3, to the predetermined device 20. In response to a request, the management device 3 may transmit the initial estimation residual value and the actual estimation residual value, which are calculated by the management device 3, to the predetermined device 20. The management device 3 may transmit the actual estimation residual value to the predetermined device 20 periodically or at a scheduled time.

The management device 3 may manage multiple air conditioners 2. The user or the administrator may differ between the air conditioners 2. The management device 3 associates each air conditioner 2 with a predetermined device 20 as a receiver of information of the air conditioner 2.

Preferably, the information terminal 24, as the predetermined device 20, includes a display that shows the information. The information terminal 24 includes a mobile phone, a smartphone, a laptop, a personal computer.

The notification device 25 as the predetermined device 20 issues a notification to the environment when information is received from the air conditioner 2. The notification device 25 includes an audio outputting device and an optical outputting device. In an example, the notification device 25 is incorporated in the air conditioner 2. In addition, the notification device 25 may be connected to the air conditioner 2. The notification device 25 is configured to communicate with the management device 3. The notification device 25 includes a notification unit 26 and a communication unit 27 that communicates with the management device 3. The notification unit 26 outputs sound or light as information. The sound is determined in advance for attracting attention. The light is emitted toward an attention attracting board that includes attention attracting letters or an attention attracting mark.

The management device 3 includes storage 21. The storage 21 stores the lease period and the initial estimation residual value of the air conditioner 2. The initial estimation residual value may be set by an agreement between the leasing company and the user or may be by a calculating unit 23 as described later. The storage 21 stores information obtained by the management device 3.

As shown in Fig. 10, the management device 3 includes a processor 30. Preferably, the management device 3 may include a calculating unit 23. The calculating unit 23 calculates at least the actual estimation residual value among the initial estimation residual value and the actual estimation residual value.

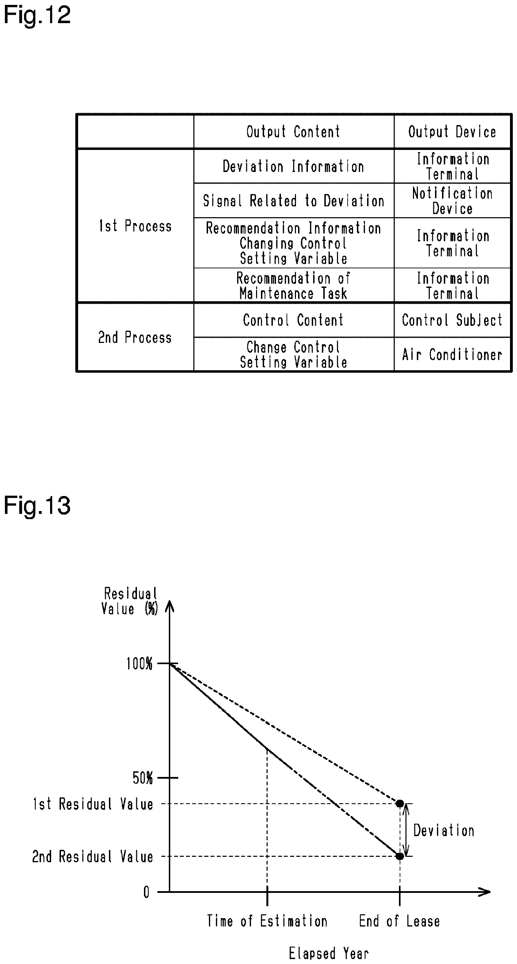

The processor 30 will be described with reference to Figs. 12 to 14.

The processor 30 predicts deviation of the actual estimation residual value from the initial estimation residual value. The deviation is an index indicating whether the operation of the air conditioner 2 is appropriate to the initial plan.

As shown in Fig. 12, the processor 30 executes at least one of a first process or a second process when predicting deviation. The first process will now be described.

In the first process, when the actual estimation residual value is predicted to deviate from the initial estimation residual value, the processor 30 outputs deviation information or a signal related to the deviation to the predetermined device 20.

The deviation prediction made by the processor 30 includes a prediction using a first method and a prediction using a second method. The processor 30 determines whether the actual estimation residual value will deviate from the initial estimation residual value at the end of the lease using one of the first method and the second method.

As shown in Fig. 13, in the first method, an actual estimation residual value is calculated, and the actual estimation residual value is used to predict deviation of the actual estimation residual value from the initial estimation residual value. In this case, when a difference between the initial estimation residual value and the actual estimation residual value is greater than a predetermined value that is set in advance, the processor 30 determines that the actual estimation residual value deviates from the initial estimation residual value at the end of the lease. In the present embodiment, the deviation when the actual estimation residual value is less than the initial estimation residual value will be described.

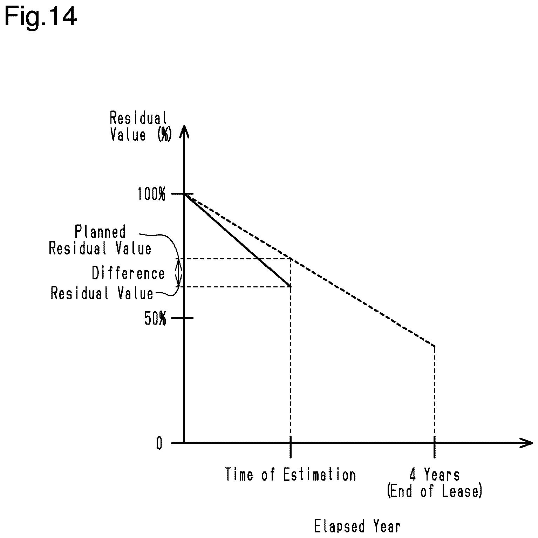

As shown in Fig. 14, in the second method, deviation of the actual estimation residual value from the initial estimation residual value is predicted based on an expected residual value chart that is set in advance. In an example, at a time of prediction in the lease period, the processor 30 calculates a difference between the present residual value of the air conditioner 2 and the expected residual value of the air conditioner 2. The expected residual value is a residual value calculated from the initial operation condition at the time of the lease contract. The expected residual value is stored in advance in the storage 21. The residual value of the air conditioner 2 at the time of prediction is calculated based on the operation records. When the processor 30 determines that the residual value of the air conditioner 2 at the time of prediction sufficiently differs from the expected residual value, the processor 30 determines that the actual estimation residual value will deviate from the initial estimation residual value at the end of the lease.

In the prediction using the first method, the expected residual value chart may be replaced with an expected actual use chart. An example of the expected actual use chart is a chart of a remaining amount ratio of the accumulated operation time of the compressor 17. At the beginning of a lease, the remaining amount ratio is set to 100%. The remaining amount ratio at the end of the lease is set by the lease contract. The remaining amount ratio is defined as [remaining accumulated operation time]/[initially planned accumulated operation time]. The remaining accumulated operation time is defined as a difference obtained by subtracting the actual accumulated operation time at the time of prediction from the initial accumulated operation time. The chart of the remaining amount ratio is set in advance.

When the actual estimation residual value is predicted to deviate from the initial estimation residual value, the processor 30 outputs deviation information related to the deviation and a signal related to the deviation to the predetermined device 20. The deviation information related to the deviation is transmitted to the information terminal 24. The signal related to the deviation is transmitted to the notification device 25.

The deviation information indicates that the actual estimation residual value is deviated from the initial estimation residual value. The deviation information includes at least one of textual information or voice information. In an example, the deviation information includes information identifying the air conditioner 2, the date when the lease of the air conditioner 2 ends, the number of days to the end of the lease of the air conditioner 2, the initial estimation residual value and the actual estimation residual value of the air conditioner 2, and a deviation value, that is, the difference between the initial estimation residual value and the actual estimation residual value. The deviation information is output from the management device 3 in a form receivable by the information terminal 24. Notification of the deviation information allows the user of the air conditioner 2 to recognize that the actual estimation residual value of the air conditioner 2 at the end of the lease will be greater than the initial estimation residual value that is planned at the beginning of the lease.

The signal related to the deviation is a signal that is formed when the actual estimation residual value is predicted to deviate from the initial estimation residual value to operate the notification device 25. In an example, the signal related to the deviation is transmitted to the notification device 25 that is associated with the air conditioner 2. The notification device 25 is operated based on reception of the signal related to the deviation. For example, when the notification device 25 is an audio outputting device, the notification device 25 outputs an attention sound to attract attention in response to reception of the signal related to the deviation. When the notification device 25 is an optical outputting device, the notification device 25 emits light to the attention attracting board in response to reception of the signal related to the deviation. The attention attracting board indicates that the residual value will become lower than planned. The operation of the notification device 25 allows the user of the air conditioner 2 to recognize that the actual estimation residual value of the air conditioner 2 at the end of the lease will be greater than the initial estimation residual value that is planned at the beginning of the lease.

The first process may further include the following process.

When the actual estimation residual value of the air conditioner 2 is predicted to be less than the initial estimation residual value, the processor 30 provides the predetermined device 20 with first recommendation information that recommends a change in the control setting variable of the air conditioner 2 based on the operation records.

The first suggestion information recommends the user of the air conditioner 2 to reconsider the operation. In an example, the first suggestion information includes a text recommending that the operating mode is switched from the normal operation to the power saving operation and a text recommending that the set temperature is changed to be higher during a cooling operation and lower during a heating operation. The first suggestion information is transmitted to the information terminal 24.

The first process may further include the following process.

When the actual estimation residual value of the air conditioner 2 is predicted to be less than the initial estimation residual value, the processor 30 provides the predetermined device 20 with second recommendation information that recommends a maintenance task based on the operation records.

The maintenance task includes the cleaning of a filter and a fan casing of the indoor unit 11, and the checking, repair, and replacement of a fan motor, a fan belt, a drain pan, a drain pump, the indoor-side heat exchanger 14, the outdoor-side heat exchanger 16, the electronic expansion valve 15, and various electromagnetic valves. In an example, the second recommendation information includes a text recommending the maintenance tasks described above. The second suggestion information is transmitted to the information terminal 24.

The second process will now be described.

In the second process, when the actual estimation residual value of the air conditioner 2 is predicted to deviate from the initial estimation residual value, the processor 30 changes the control setting variable of the air conditioner 2 to minimize the deviation at the end of the lease based on the deviation information.

The processor 30 outputs a control instruction to the air conditioner 2 to change the control setting variable of the air conditioner 2. More specifically, the air conditioner 2 includes the following configuration. The air conditioner 2 is configured to be remotely operable. The controller 18 of the air conditioner 2 includes a program that changes the control setting variable based on a control instruction. The air conditioner 2 changes the control setting variable based on the control instruction. In an example, the control instruction includes one of an instruction to switch the operating mode from the normal operation to the power saving operation and an instruction to cause the set temperature of the room to approach the outside temperature.

With reference to Fig. 10, the calculating unit 23 will be described. In an example, the calculating unit 23, the processor 30, and the storage 21 are accommodated in the same case. The calculating unit 23 may be formed as a device separate from the processor 30 and the storage 21. The calculating unit 23 and the processor 30 may be separately arranged in the network N.

The calculating unit 23 calculates the actual estimation residual value as follows. The calculating unit 23 obtains an operation record of the air conditioner 2 in a specified time during a lease period. The calculating unit 23 calculates a lease-end actual estimation residual value of the air conditioner 2 based on the operation record.

More specifically, the calculating unit 23 estimates a future operation of the air conditioner 2 based on the operation record of the air conditioner 2. The calculating unit 23 estimates the operation of the air conditioner 2 until the end of the lease on the assumption that the air conditioner 2 will be used in the future with the same tendency as the operation record of the air conditioner 2. The calculating unit 23 calculates a lease-end actual estimation residual value based on the estimation about the operation of the air conditioner 2. The calculating unit 23 calculates the lease-end actual estimation residual value by regression analysis of the operation record.

Preferably, the calculating unit 23 further obtains environment information related to the installation location of the air conditioner 2. The calculating unit 23 calculates the lease-end actual estimation residual value of the air conditioner 2 based on the environment information and the operation record of the air conditioner 2.

Wear and deterioration of the air conditioner 2 are affected by the installation environment of the air conditioner 2. The installation environment of the air conditioner 2 includes environment information of the indoor unit 11 (hereafter, referred to as first environment information), and environment information of the outdoor unit 12 (hereafter, referred to as second environment information).

Wear and deterioration of the air conditioner 2 are affected by the environment in which the indoor unit 11 is installed and the environment in which the outdoor unit 12 is installed. For example, when the indoor unit 11 is installed in an office having a controlled air environment, wear and deterioration of the indoor unit 11 are slow. When installed in a restaurant facing a street having heavy traffic, the indoor unit 11 wears or deteriorates quickly. When the outdoor unit 12 is installed in a coastal region in which the air has a large salt content, wear and deterioration of the air conditioner 2 are quick. Therefore, it is preferred that the calculating unit 23 calculates the lease-end residual value based on the first environment information and the second environment information.

The first environment information is information related to the installation environment of the indoor unit 11. The first environment information is associated with the air conditioner 2 and stored in the storage 21 in advance. The first environment information includes at least one of a region, a regional climate, an altitude, a usage purpose, an installation location, or an indoor temperature. The region includes at least one of a plain area, a coastal area, a mountain area, or an urban area. The regional climate includes at least one of a polar climate, a temperate climate, an and climate, a tropical climate, a subtropical climate, or a subarctic climate. The altitude includes a low altitude, a middle altitude, and a high altitude. The usage purpose includes at least one of an office, food and beverage, a gym, a shop, learning, device manufacturing, or food manufacturing. The installation location indicates an indoor installation location. The installation location includes at least one of an office workroom, a dining room, a cooking room, a kitchen, a smoking room, an entrance, a sealing, or a window side. The indoor temperature includes an indoor average temperature and an indoor average humidity in summer and an indoor average temperature and an indoor average humidity in winter.

The second environment information is information related to the installation environment of the outdoor unit 12. The second environment information is associated with the air conditioner 2 and stored in the storage 21 in advance. The second environment information includes at least one of a region, a regional climate, an altitude, an installation location, or an outdoor air condition. The installation location indicates whether a shield against wind or rain is present. Examples of the shield include an eave, a roof, and a wall. The region, the regional climate, and the altitude are as described above. The outdoor air condition includes an average temperature and an average humidity of the region in summer and an average temperature and an average humidity of the region in winter.

### Actual Estimation Residual Value Calculation Example

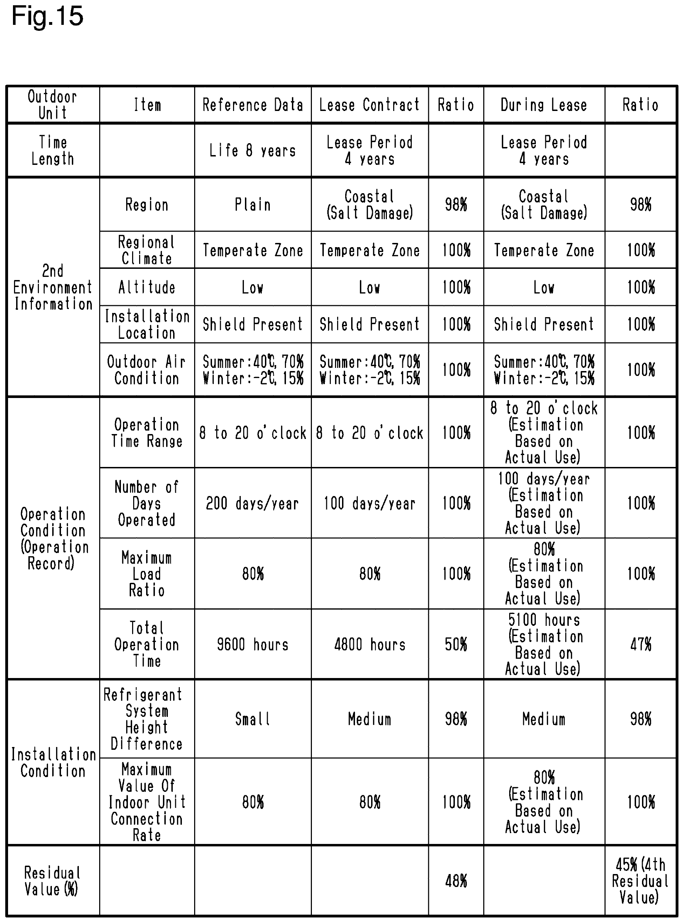

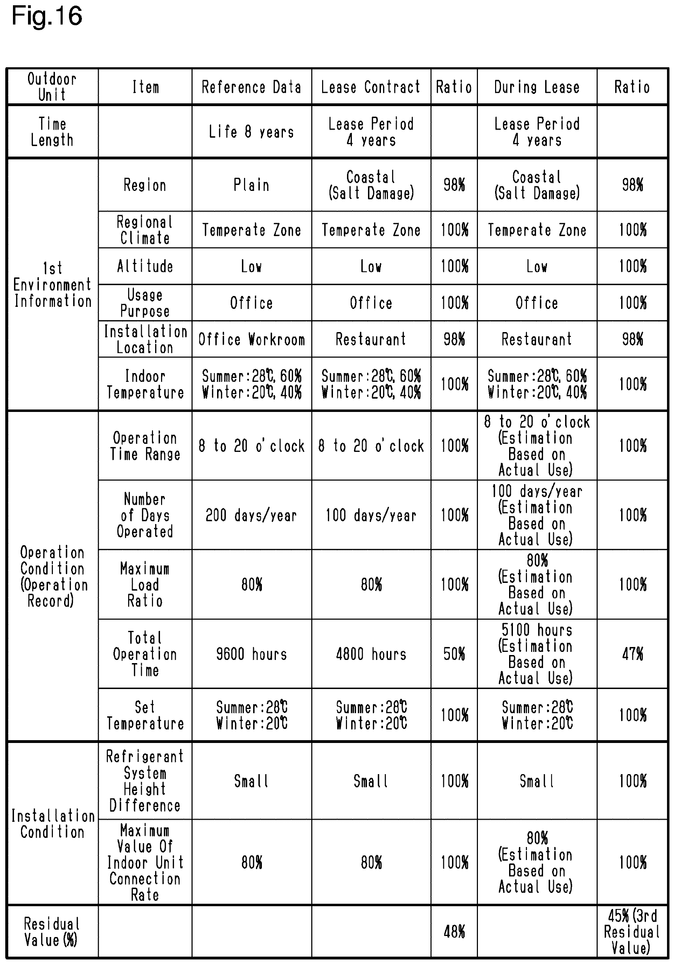

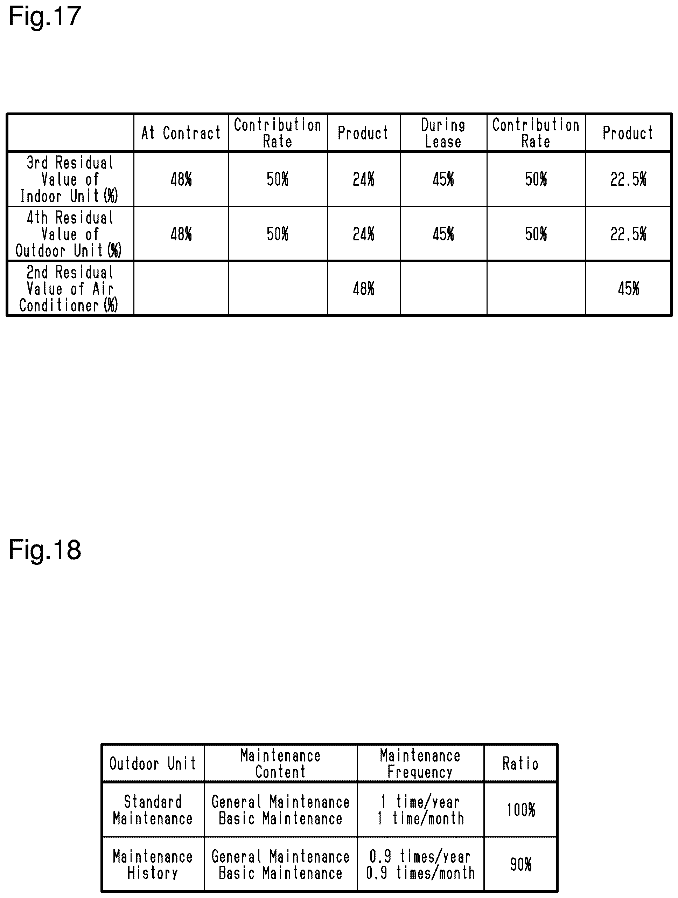

With reference to Figs. 15 to 17, an example of calculation of the actual estimation residual value will be described. In this example, the calculating unit 23 calculates the actual estimation residual value based on a lease-end residual value of the indoor unit 11 (hereafter, referred to as "third residual value") and a lease-end residual value of the outdoor unit 12 (hereafter, referred to as "fourth residual value"). Fig. 15 is a table including numerical values used to calculate the residual value of the outdoor unit 12. Fig. 16 is a table including numerical values used to calculate the residual value of the indoor unit 11. Fig. 17 is a table for describing a calculating process of a residual value of the air conditioner 2.

The calculating unit 23 obtains the first environment information and the second environment information. The calculating unit 23 further obtains an operation record of the indoor unit 11 and an operation record of the outdoor unit 12.

The calculating unit 23 calculates the lease-end residual values of the indoor unit 11 and the outdoor unit 12 based on the first environment information, the second environment information, the operation record of the indoor unit 11, and the operation record of the outdoor unit 12. The calculating unit 23 further calculates the actual estimation residual value of the air conditioner 2 based on the residual value of the indoor unit 11 and the residual value of the outdoor unit 12.

The calculating unit 23 calculates the fourth residual value of the outdoor unit 12 based on the second environment information, and an operation condition of the outdoor unit 12. The fourth residual value refers to a lease-end residual value of the outdoor unit 12 that is estimated based on the operation record.

The operation condition of the outdoor unit 12 includes at least one of a daily operation time range, the number of days operated in a year, a maximum load ratio, or a total operation time. In an example, the operation of the outdoor unit 12 is defined as operation of the compressor 17. The daily operation time range refers to a time range from the time at which operation is started to the time at which the operation is stopped in a day. The number of days operated in a year is obtained by subtracting the number of non-operation days from the number of days in a year. The maximum load ratio refers to the ratio of load on the outdoor unit 12 to the maximum load designed for the outdoor unit 12. In an example, the total operation time refers to an accumulated time in which the compressor 17 is in operation.

The calculating unit 23 calculates the third residual value of the indoor unit 11 based on the first environment information and an operation condition of the indoor unit 11. The third residual value refers to a lease-end residual value of the indoor unit 11 that is estimated based on the operation record.

The operation condition of the indoor unit 11 includes at least one of a daily operation time range, the number of days operated in a year, a maximum load ratio, a total operation time, or a set temperature. In an example, the operation of the indoor unit 11 is defined as operation of a fan. In an example, the total operation time refers to an accumulated time in which the fan is in operation.

The calculating unit 23 has the contribution rate of the indoor unit 11 to the air conditioner 2 and the contribution rate of the outdoor unit 12 to the air conditioner 2 that are set in advance in the air conditioner 2. The calculating unit 23 calculates a sum of the product of the third residual value of the indoor unit 11 and the contribution rate of the indoor unit 11 and the product of the fourth residual value of the outdoor unit 12 and the contribution rate of the outdoor unit 12 as the actual estimation residual value of the air conditioner 2. Fig. 17 shows an example of the contribution rate of the indoor unit 11 and the contribution rate of the outdoor unit 12.

With reference to Fig. 15, an example of calculation of the fourth residual value of the outdoor unit 12 will be described. The fourth residual value of the outdoor unit 12 is shown on the bottom of the first column from the right in Fig. 15.

The fourth residual value of the outdoor unit 12 is calculated based on reference data. The reference data includes a predetermined life, an ideal environment that minimizes deterioration of the air conditioner 2, an ideal installation condition that does not impose an excess load, and an ideal operation condition. The ideal operation condition is an operation condition that allows the air conditioner 2 to be operated until the end of the life without trouble when the air conditioner 2 is operated in the ideal environment and the ideal installation condition.

In the present embodiment, the life of the outdoor unit 12 is set to eight years.

In the ideal environment, the region is set to a plain region, the regional climate is set to a temperate climate, the altitude is set to a low altitude, the installation location is set to presence of shield, the outdoor air condition is set to temperature of 40°C and 70% humidity in summer and temperature of -2°C and 15% humidity in winter.

In the ideal installation condition, the height difference of the refrigerant system is set to small. In a system including multiple indoor units 11, the maximum value of the indoor unit connection rate is set to 80%.

In the ideal operation condition, the daily operation time range is set to from 8 o'clock to 20 o'clock, the number of days operated in a year is set to 200 days, the maximum load ratio is set to 80%, and the total operation time is set to 9600 hours.

The fourth residual value of the outdoor unit 12 is calculated based on a ratio determined based on comparison of the reference data with residual value calculation items. The residual value calculation items include the second environment information, which is the environment of the outdoor unit 12, the operation record, and the installation condition of the outdoor unit 12.

More specifically, the fourth residual value of the outdoor unit 12 is calculated as the product of a first ratio, a second ratio, and a third ratio. The first ratio is a ratio of each item in the second environment information to standard data of the environment. The second ratio is a ratio of each item in the operation record to standard data of the operation condition. The third ratio is a ratio of each item in the installation condition to standard data of the installation condition. The first ratio, the second ratio, and the third ratio may be considered as a type of residual value of each item. The first ratio and the third ratio are set in advance. The second ratio is obtained by calculation.

The first ratio of each item in the second environment information is set in advance as a ratio to the standard data. For example, a coastal region is more prone to salt damage than a plain region. Therefore, the first ratio for the coastal region is set to 98%.

The second ratio of the operation record is calculated as a ratio to the standard data. For example, when the total operation time of the outdoor unit 12 is 9600 hours in the reference data and the lease-end total operation time is estimated from the actual use to be 5100 hours, the remaining operable time equals a value (hereafter, referred to as differential time) obtained by subtracting the estimated total operation time (5100 hours) from the total operation time in the reference data. The second ratio as the residual value is calculated to be 4500 hours (differential time)/9600 hours. In this case, the second ratio is 47%.

The third ratio of the installation condition is set in advance as a ratio to the standard data. For example, when the height difference of the refrigerant system is medium, the air conditioning efficiency is lower than when the height difference of the refrigerant system is small. As a result, the operation time of the outdoor unit 12 may be increased, and thus the third ratio is set to 98%.

In the example shown in Fig. 15, the fourth residual value of the outdoor unit 12 is calculated by multiplying the first ratio, the second ratio, and the third ratio and is 45%. If the fourth residual value is calculated from only the total operation time, the fourth residual value will be 47%. In the present embodiment, the fourth residual value of the outdoor unit 12 is less than 47% since the second environment information and the installation condition are reflected.

The third residual value of the indoor unit 11 may be calculated in the same manner as the outdoor unit 12.

For the indoor unit 11, Fig. 16 shows a first ratio of the first environment information to standard data of the environment, a second ratio of the operation record to standard data of the operation condition, and a third ratio of the installation condition to standard data of the installation condition. The third residual value of the indoor unit 11 is shown on the bottom of the first column from the right in Fig. 16. In the example shown in Fig. 18, the third residual value of the indoor unit 11 is 45%.

The actual estimation residual value of the air conditioner 2 is calculated as described above. That is, the calculating unit 23 calculates a sum of the product of the third residual value of the indoor unit 11 and the contribution rate of the indoor unit 11 and the product of the fourth residual value of the outdoor unit 12 and the contribution rate of the outdoor unit 12 as the actual estimation residual value of the air conditioner 2.

As shown in Fig. 17, in the present embodiment, the actual estimation residual value of the air conditioner 2 is calculated by 45%×50%+45%×50% and is 45%. The example of calculation of the actual estimation residual value described above may be applied to calculation of other residual values.

With reference to Fig. 18, another example of a calculation process of the actual estimation residual value will be described.

The calculating unit 23 may further obtain maintenance history information of the air conditioner 2 and calculate the lease-end actual estimation residual value of the air conditioner 2 based on the maintenance history information and the operation record of the air conditioner 2.

Wear and deterioration of the air conditioner 2 are affected by the maintenance history of the air conditioner 2. For example, when the maintenance is periodically performed, wear and deterioration of the air conditioner 2 are slower than when the maintenance is not performed. In this regard, it is preferred that the calculating unit 23 calculates the lease-end actual estimation residual value of the air conditioner 2 based on the maintenance history information and the operation record of the air conditioner 2 as described above.

The calculating unit 23 obtains the maintenance history information from the storage 21. The maintenance history information of the air conditioner 2 is stored in the storage 21 in association with the air conditioner 2 whenever maintenance is performed. The maintenance history information includes history of at least one of the cleaning of a filter or a fan casing of the indoor unit 11, or the checking, repair, or replacement of a fan motor, a fan belt, a drain pan, a drain pump, the indoor-side heat exchanger 14, the outdoor-side heat exchanger 16, the electronic expansion valve 15, or various electromagnetic valves.

The actual estimation residual value of the air conditioner 2 is calculated as the product of an actual estimation residual value that is calculated by a predetermined calculation process and the fourth ratio related to maintenance. The fourth ratio is set in advance as a ratio to standard maintenance data (refer to Fig. 18).

In the present embodiment, the standard maintenance includes general maintenance performed once a year and basic maintenance performed once a month. The ratio of the standard maintenance is 100%. As shown in Fig. 18, when the general maintenance is performed 0.9 times per year on average and the basic maintenance is performed 0.9 times per month on average, the ratio of the actual maintenance is set to 90%. In the case of such actual maintenance, in comparison with a case in which the standard maintenance is completely performed, the actual estimation residual value of the air conditioner 2 is 90% of the reference residual value. For example, when the actual estimation residual value is calculated as 45% by a predetermined calculation process and the actual maintenance is 90%, the actual estimation residual value is calculated as 40.5%.

In addition, preferably, the calculating unit 23 further obtains maintenance history information of the air conditioner 2 and calculates the lease-end actual estimation residual value of the air conditioner 2 based on the maintenance history information, the environment information, and the operation record of the air conditioner 2. With this process, the actual estimation residual value is further accurately calculated.

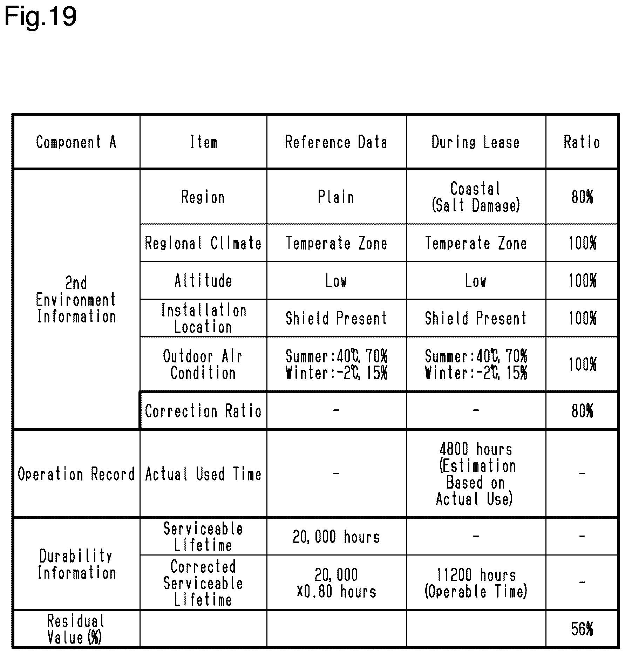

As shown in Fig. 19, the calculating unit 23 may calculate the actual estimation residual value based on the residual value of each component as follows. In an example, the storage 21 stores the components of the air conditioner 2 and durability information of each component. The calculating unit 23 obtains the durability information of each component of the air conditioner 2 and a component usage record of each component of the air conditioner 2 as an operation record of the air conditioner 2 in a specified time in a lease period.

The durability information includes at least one of the serviceable lifetime or the maximum frequency of a component. The component usage record refers to a usage record of a component. The usage record includes at least one of an accumulated used time or accumulated number of times the component is used. When calculating the actual estimation residual value, the calculating unit 23 obtains the durability information of the components from the storage 21. The usage record of a component is reset when the component is replaced. The component usage record is estimated from the operation record of the air conditioner 2. The estimation process is specified in advance. When the component is the compressor 17, the operation record of the air conditioner 2 substantially conforms to the component usage record of the compressor 17. Therefore, the component usage record is calculated as the operation record of the air conditioner 2 times one. When a component is replaced by a person, the person updates component history of the air conditioner 2. When calculating the actual estimation residual value, the calculating unit 23 obtains the operation record and the component history from the air conditioner 2.

The calculating unit 23 calculates a second component residual value of each component at the end of the lease based on the durability information and the component usage record of the component. The second component residual value is a residual value of the component that is estimated based on the component usage record during the lease. The calculating unit 23 calculates a multiplication value of each component by multiplying the second component residual value and the contribution rate to the air conditioner 2, and adds the multiplication values of the components to calculate the lease-end actual estimation residual value of the air conditioner 2.

With reference to Fig. 19, an example of calculation of the residual value of a component A in the outdoor unit 12 will now be described.

The second component residual value of the component A is calculated based on the operation record, durability information of the component A, and a correction ratio (correction coefficient) to the durability information.

The correction ratio to the durability information is set in advance as a ratio of each item in the second environment information to standard data. For example, a coastal region is more prone to salt damage than a plain region. Therefore, the correction ratio of the coastal region is set to 80% for the component A. The correction ratio has a different value for each component. For example, the correction ratio for a component having a high resistance to salt is defined as 100%. Metal components such as the exterior board of the outdoor unit 12 and the fin of the outdoor-side heat exchanger 16 have a low resistance to salt. Thus, the correction ratio of a metal component is set to a low value.

It is preferred that durability information is corrected based on the correction ratio to the durability information. For example, when the durability information is the serviceable lifetime of the component A, the corrected value of the serviceable lifetime is defined by the product of the serviceable lifetime and the correction ratio. Thus, the serviceable lifetime is corrected based on the second environment information.

In the example shown in Fig. 19, each item in the second environment information is the same as that in the reference data except for "region". The region is set to "costal". The correction ratio of the second environment information is defined as the product of all items in the second environment information. In the present embodiment, the correction ratio of the second environment information is calculated as 80%. In this case, the serviceable lifetime is corrected from 20000 hours to 16000 hours (refer to corrected serviceable lifetime in Fig. 19).

When the usage record of the component A estimates that the lease-end estimated operation time is 4800 hours, the remaining operable time equals a value (differential time) obtained by subtracting 4800 from 16000. In this example, the differential time is 11200 hours. The residual value of the component A is defined as the ratio of the differential time to the non-corrected serviceable lifetime. In this example, the residual value of the component A is 56%.

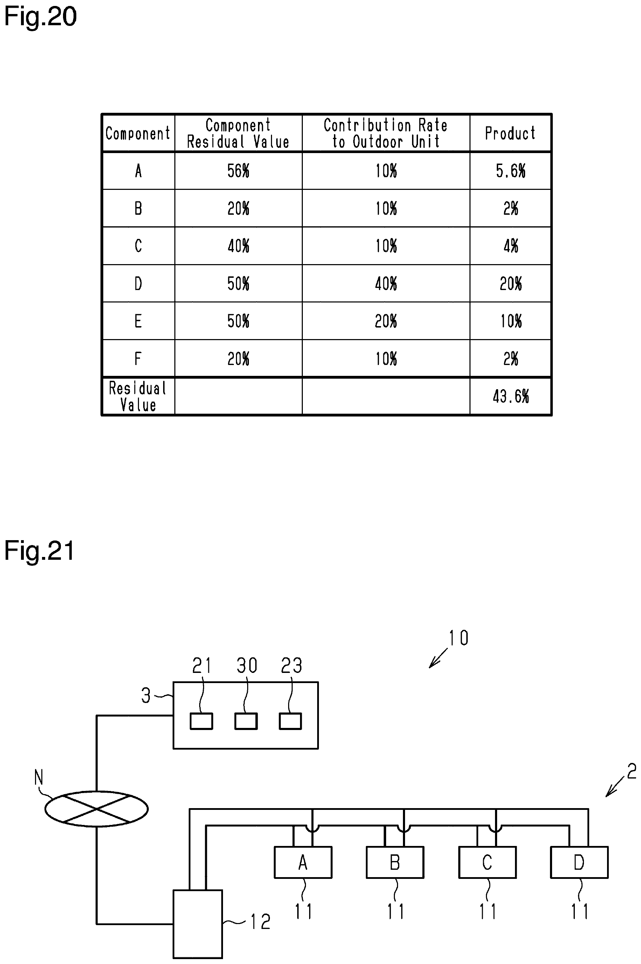

Fig. 20 is a table including the residual value of components and the contribution rate of the components. As shown in Fig. 20, for each component, the product of the residual value of the component and the contribution rate of the component is calculated. The actual estimation residual value of the outdoor unit 12 is defined as a sum of the products. The actual estimation residual value of the indoor unit 11 may be calculated through the same calculating process.

### Initial Estimation Residual Value Calculation Example

The calculating unit 23 may calculate the initial estimation residual value of the air conditioner 2. An example of calculation of the initial estimation residual value will be described below.

The initial estimation residual value is a lease-end residual value that is set in advance at the beginning of a lease.

The calculating unit 23 obtains environment information related to the installation location of the air conditioner 2 and calculates the lease-end initial estimation residual value of the air conditioner 2 based on the environment information and the initial operation condition of the air conditioner 2.

As described above, wear and deterioration of the air conditioner 2 are affected by the installation environment of the air conditioner 2. Thus, the calculating unit 23 calculates an initial estimation residual value of the air conditioner 2 at the end of a lease based on the environment information and the initial operation condition. The initial operation condition is an operation condition that is set at the time of a lease contract.

Preferably, the calculating unit 23 further obtains planned maintenance information that is set in advance for the air conditioner 2 and calculates the lease-end initial estimation residual value of the air conditioner 2 based on the planned maintenance information and the initial operation condition of the air conditioner 2.

Future wear and deterioration of the air conditioner 2 are affected by the maintenance performed on the air conditioner 2. For example, when the maintenance is planned to be periodically performed, wear and deterioration of the air conditioner 2 are slower than when the maintenance is not performed. In this regard, it is preferred that the calculating unit 23 calculates the lease-end initial estimation residual value of the air conditioner 2 based on the planned maintenance information and the initial operation condition of the air conditioner 2 as described above. The calculating unit 23 obtains the planned maintenance information from the storage 21. The planned maintenance information of the air conditioner 2 is set in advance for the air conditioner 2. The planned maintenance information is specified by a lease contract. The planned maintenance information includes at least one of the cleaning of a filter or a fan casing of the indoor unit 11, or the checking, repair, or replacement of a fan motor, a fan belt, a drain pan, a drain pump, the indoor-side heat exchanger 14, the outdoor-side heat exchanger 16, the electronic expansion valve 15, or various electromagnetic valves.

Preferably, the calculating unit 23 further obtains planned maintenance information that is set in advance for the air conditioner 2 and calculates the lease-end initial estimation residual value of the air conditioner 2 based on the planned maintenance information, the environment information, and the initial operation condition of the air conditioner 2. With this configuration, the initial estimation residual value is further accurately calculated.

The calculating unit 23 may calculate the initial estimation residual value based on the residual value of each component as follows. In an example, the calculating unit 23 obtains durability information of each component of the air conditioner 2. The calculating unit 23 calculates a first component residual value of each component at the end of the lease based on the durability information of the component and the operation condition. The first component residual value is a residual value of the component that is estimated at the beginning of the lease. The calculating unit 23 calculates a multiplication value of each component by multiplying the first component residual value and the contribution rate to the air conditioner 2, and adds the multiplication values of the components to calculate the lease-end initial estimation residual value of the air conditioner 2.

The initial estimation residual value may be calculated by a process based on the calculation process of the actual estimation residual value. For example, the calculating unit 23 calculates the initial estimation residual value based on a lease-end residual value of the indoor unit 11 ("fifth residual value") and a lease-end residual value of the outdoor unit 12 (hereafter, referred to as "sixth residual value"). The fifth residual value and the sixth residual value are calculated based on the calculation process of the third residual value and the fourth residual value.

### Operation

The operation of the lease assistance system 10, which does not form part of the present invention, will now be described.

The lease assistance system 10, which does not form part of the present invention, predicts deviation of the actual estimation residual value of the air conditioner 2, which is subject to a lease, from the initial estimation residual value during the lease. When predicting the deviation of the actual estimation residual value from the initial estimation residual value, the processor 30 executes at least one of the first process or the second process described above. Since the prediction is made during the lease about whether deviation of the residual value will occur at the end of the lease, the deviation of the residual value is less likely to occur.

The advantages of the lease assistance system 10, which does not form part of the present invention, will be described.
(1) The processor 30 performs at least one of (a) or (b) described below. (a) When the actual estimation residual value of the air conditioner 2 after use over the set period, which is estimated based on actual use of the air conditioner 2, is predicted to deviate from the initial estimation residual value of the air conditioner 2 after use over the set period, which is estimated before the actual use, the processor outputs deviation information or a signal related to the deviation to the predetermined device 20. (b) The processor changes the control setting variable of the air conditioner 2 based on the deviation information to minimize the deviation after use over the set period. With this configuration, when the actual estimation residual value is predicted to deviate from the initial estimation residual value, the predetermined process is executed to minimize the deviation of the actual estimation residual value from the initial estimation residual value.
(2) The control setting variable includes at least one of an operating mode of the air conditioner 2, a set temperature for room temperature, a setting state of a thermostat, airflow of the indoor unit 11, an air direction of the indoor unit 11, activation and deactivation times of the air conditioner 2, an evaporation temperature, a condensation temperature, or a capacity value of an operational component of the air conditioner 2. With this configuration, the operation of the air conditioner 2 is changed by at least one of the control setting variables.
(3) The processor 30 compares the initial estimation residual value with the actual estimation residual value to execute at least one of (a) to (d) described below.
   (a) When the actual estimation residual value is predicted to be less than the initial estimation residual value, the processor 30 provides the predetermined device 20 with first recommendation information that recommends a change in the control setting variable of the air conditioner 2 based on actual use.
   (b) When the actual estimation residual value is predicted to be less than the initial estimation residual value, the processor 30 provides the predetermined device 20 with the second recommendation information that recommends a maintenance task based on actual use.
   (c) Based on a result of comparison of the initial estimation residual value with the actual estimation residual value, the processor 30 provides a predetermined terminal with recommended action information that recommends to operate the indoor units 11 in order of priority from those having a higher residual value that is based on the actual use of the indoor units 11.
   (d) Based on a result of comparison of the initial estimation residual value with the actual estimation residual value, the processor 30 specifies an item in the operation condition of the indoor unit 11 and the operation condition of the outdoor unit 12 that was different in actual use from an initial operation condition, and provides the specified item to a predetermined terminal.

This configuration has at least one of the advantages (a) to (d) described below.
(a) The control setting variable is more likely to be changed to minimize deviation of the actual estimation residual value from the initial estimation residual value.
(b) The maintenance task is more likely to be performed on the air conditioner 2 to minimize deviation of the actual estimation residual value from the initial estimation residual value.
(c) The user is notified of the priority order of using the indoor units 11. Thus, the residual values of the indoor unit 11 may be equalized.
(d) Notification of deviation of the past operation from the initial operation condition prompts reconsideration of the operation so that the deviation of the actual estimation residual value from the initial estimation residual value is minimized.

(4) The processor 30 predicts whether the actual estimation residual value of the air conditioner 2 will deviate from the initial estimation residual value. When the actual estimation residual value is predicted to deviate from the initial estimation residual value, the processor 30 executes at least one of the first process or the second process described above. With this configuration, when the residual value at the end of the lease is predicted to deviate from the planned residual value, the predetermined process is executed during the lease. This minimizes the deviation of the residual value from the planned residual value.

(5) When the actual estimation residual value is predicted to be less than the initial estimation residual value, the processor 30 provides the predetermined device 20 with the first recommendation information recommending a change in the control setting variable of the air conditioner 2 based on the operation record. With this configuration, the control setting variable is more likely to be changed so that the actual estimation residual value approaches the initial estimation residual value.

(6) When the actual estimation residual value is predicted to be less than the initial estimation residual value, the processor 30 provides the predetermined device 20 with the second recommendation information recommending a maintenance task based on the operation record. With this configuration, the maintenance task is more likely to be performed on the air conditioner 2. When the maintenance is performed, the air conditioning efficiency of the air conditioner is increased so that the air conditioner is used less frequently. As a result, the actual estimation residual value gradually approaches the initial estimation residual value.

(7) The calculating unit 23 calculates the actual estimation residual value based on the operation record. This configuration uses the operation record of the air conditioner 2 to calculate the actual estimation residual value. Thus, the actual estimation residual value is accurately calculated.

(8) The calculating unit 23 may calculate the actual estimation residual value based on the environment information and the operation record of the air conditioner 2. This configuration uses the environment information and the operation record of the air conditioner 2 to calculate the actual estimation residual value. Thus, the actual estimation residual value is accurately calculated.

(9) The calculating unit 23 may calculate the actual estimation residual value based on the maintenance history information and the operation record of the air conditioner 2. This configuration uses the maintenance history information and the operation record of the air conditioner 2 to calculate the actual estimation residual value. Thus, the actual estimation residual value is accurately calculated.

(10) The calculating unit 23 may calculate the actual estimation residual value based on the maintenance history information, the environment information, and the operation record of the air conditioner 2. This configuration uses the maintenance history information, the environment information, and the operation record of the air conditioner 2 to calculate the actual estimation residual value. Thus, the actual estimation residual value is accurately calculated.

(11) The calculating unit 23 calculates the initial estimation residual value based on the initial operation condition of the air conditioner 2 that is set in advance at the beginning of the lease. This configuration uses the initial operation condition of the air conditioner 2 to calculate the initial estimation residual value. Thus, the initial estimation residual value is accurately calculated.

(12) The calculating unit 23 further calculates the environment information and the initial estimation residual value of the air conditioner 2. This configuration uses the environment information and the initial operation condition of the air conditioner 2 to calculate the initial estimation residual value. Thus, the initial estimation residual value is accurately calculated.

(13) The calculating unit 23 may calculate the initial estimation residual value based on the planned maintenance information and the initial operation condition of the air conditioner 2. This configuration uses the planned maintenance information and the initial operation condition of the air conditioner 2 to calculate the initial estimation residual value. Thus, the initial estimation residual value is accurately calculated.

(14) The calculating unit 23 may calculate the initial estimation residual value based on the planned maintenance information, the environment information, and the initial operation condition of the air conditioner 2. This configuration uses the planned maintenance information, the environment information, and the initial operation condition of the air conditioner 2 to calculate the initial estimation residual value. Thus, the initial estimation residual value is accurately calculated.

(15) The calculating unit 23 calculates the first component residual value of each component based on the durability information of the component and the operation condition. The calculating unit 23 calculates a multiplication value of each component by multiplying the first component residual value and the contribution rate to the air conditioner 2, and adds the multiplication values of the components to calculate the initial estimation residual value of the air conditioner 2. With this configuration, the first component residual value of each component is obtained from the durability information of the component and the operation condition, and the residual value of the air conditioner 2 is obtained from the first component residual values of the components. Thus, the initial estimation residual value is accurately calculated.

(16) The calculating unit 23 calculates the second component residual value of each component at the end of the lease based on the durability information and the component usage record of the component. The calculating unit 23 calculates a multiplication value of each component by multiplying the second component residual value and the contribution rate to the air conditioner 2, and adds the multiplication values of the components to calculate the lease-end actual estimation residual value of the air conditioner 2. With this configuration, the second component residual value of each component is obtained from the durability information and the component usage record of the component, and the residual value of the air conditioner 2 is obtained from the second component residual values of the components. Thus, the actual estimation residual value is accurately calculated.

### Second Embodiment of Assistance System, which does not form part of the present invention

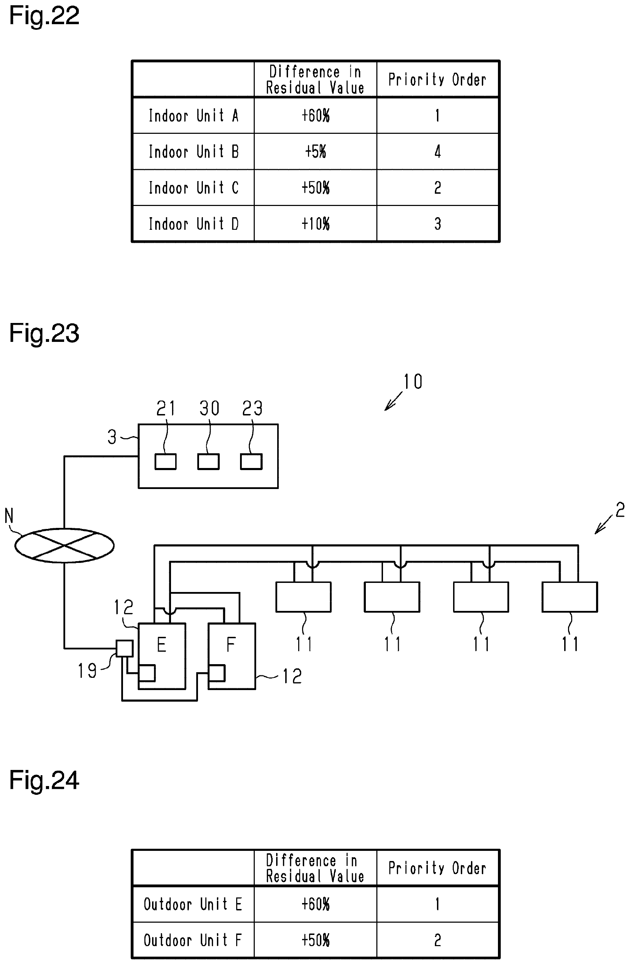

A second embodiment of a lease assistance system 10, which does not form part of the present invention, for an air conditioner 2 will now be described with reference to Figs. 21 and 22. The same reference signs are given to those components that are the same as the corresponding components of the first embodiment. Such components will not be described in detail. The "Difference in Residual Value" shown in Fig. 22 shows a value obtained by subtracting the initial estimation residual value from the actual estimation residual value.

As shown in Fig. 21, in the present embodiment, which does not form part of the present invention, the management device 3 of the lease assistance system 10 manages an air conditioner 2 that includes multiple indoor units 11. The processor 30 calculates the initial estimation residual value and the actual estimation residual value of each indoor unit 11. The processor 30 compares the initial estimation residual value with the record estimation residual value of each indoor unit 11 in the air conditioner 2 and operates, based on the result of the comparison, the indoor units 11 in order of priority from those having a higher residual value that is based on the operation records of the indoor units 11.

The usage condition of the indoor units 11 that are connected in parallel to the outdoor unit 12 changes due to various factors. Hence, as time elapses, the indoor units 11 will vary in the usage record.

In a first example, the indoor units 11 are connected in parallel and located in the same room. As a result of a long term use, the indoor units 11 vary in the operation time, so that some of the indoor units 11 may have been operated for a longer time and some of the indoor units 11 may have been operated for a shorter time. This is because the ease for starting operation varies between the indoor units 11 due to various factors such as unevenness of the room temperature before the indoor units 11 start to operate, variations in the accuracy of sensors of the indoor units 11, and the air flow in the room. In the room, the environment of the indoor units 11 is prepared by those indoor units 11 having started to operate earlier than the remaining indoor units 11. Thus, the remaining indoor units 11 tend to be operated for a shorter time. As a result, the usage record varies between the indoor units 11 that are located in the same room, and the residual value varies between the indoor units 11.

In a second example, the indoor units 11 connected in parallel may be located in different rooms. In such a system, loads applied to the indoor units 11 vary depending on the frequency the room is used, the insolation amount of the room, the size of the room, and the ventilation property of the room. Even when the rooms are used in the same manner, the operation time differs between the indoor units 11. As a result, the usage record varies between the indoor units 11, and the residual value varies between the indoor units 11.

In such a situation, in the present embodiment, as shown in Fig. 22, the processor 30 operates the indoor units 11 in order of priority from those having a higher residual value. This allows for equalization of the residual values of the indoor units 11. The equalization of the residual values of the indoor units 11 avoids a large deviation of the residual value of a particular indoor unit 11 from the planned residual value.

Preferably, the processor 30 compares the initial estimation residual value with the actual estimation residual value of each indoor unit 11 in the air conditioner 2 and operates the indoor units 11 so that the residual values of the indoor units 11 are equal to each other in accordance with the result of the comparison. For example, the processor 30 sets the operation time of an indoor unit 11 to be shorter as the difference between the initial estimation residual value and the actual estimation residual value of the indoor unit 11 increases.

The processor 30 may further compare the initial estimation residual value with the actual estimation residual value of each indoor unit 11 in the air conditioner 2 and provides, based on the result of the comparison, a specified information terminal 24 with recommended action information that recommends to operate the indoor units 11 in order of priority from those having a higher residual value that is based on the operation records of the indoor units 11.

In an example, the recommended action information includes information specifying an indoor unit 11 given a higher operation priority and information specifying an indoor unit 11 given a lower operation priority. Thus, the user is notified of the priority order of using the indoor units 11, and the residual values of the indoor units 11 may be equalized.

In the second example described above, when the indoor units 11 connected in parallel are located in different rooms, the processor 30 may store a load applied to the indoor unit 11 in each room in advance. Based on the loads on the rooms, the processor 30 may provide the specified information terminal 24 with information of the room (for example, room number) including the indoor unit 11 that is recommended operating as the recommended action information so as not to generate a difference in the residual value between the indoor units 11 in the rooms in the future. In an example, in summer, the processor 30 provides the information terminal 24 with recommended action information recommending to give priority to use of a room that receives less insolation. In winter, the processor 30 provides the information terminal 24 with recommended action information recommending to give priority to use of a room that receives more insolation.

### Third Embodiment of Assistance System, which does not form part of the present invention

A third embodiment of a lease assistance system 10, which does not form part of the present invention, for an air conditioner 2 will now be described with reference to Figs. 23 and 24. The same reference signs are given to those components that are the same as the corresponding components of the first embodiment. Such components will not be described in detail.

In the present embodiment, the management device 3 of the lease assistance system 10 manages an air conditioner 2 that includes multiple outdoor units 12. The processor 30 calculates the initial estimation residual value and the actual estimation residual value of each outdoor unit 12. The processor 30 compares the initial estimation residual value with the actual estimation residual value of each outdoor unit 12 in the air conditioner 2 and operates, based on the result of the comparison, the outdoor units 12 in order of priority from those having a higher residual value that is based on the operation records of the outdoor units 12.

As shown in Fig. 23, the usage condition of the outdoor units 12 that are connected in parallel to the refrigerant circuit changes due to various factors. Hence, as time elapses, the outdoor units 12 will vary in the usage record. In such a situation, in the present embodiment, as shown in Fig. 24, the processor 30 operates the outdoor units 12 in order of priority from those having a higher residual value based on the operation records of the outdoor units 12. This allows for equalization of the residual values of the outdoor units 12. The equalization of the residual values of the outdoor units 12 avoids a large deviation of the residual value of a particular outdoor unit 12 from the planned residual value.

Preferably, the processor 30 compares the initial estimation residual value with the actual estimation residual value of each outdoor unit 12 in the air conditioner 2 and operates the outdoor units 12 to equalize the residual values of the outdoor units 12 in accordance with the result of the comparison. For example, the processor 30 sets the operation time of an outdoor unit 12 to be shorter as the difference between the initial estimation residual value and the actual estimation residual value of the outdoor unit 12 increases.

Fourth Embodiment of Assistance System, which does not form part of the present invention

A third embodiment of a lease assistance system 10, which does not form part of the present invention, for an air conditioner 2 will now be described. The same reference signs are given to those components that are the same as the corresponding components of the first embodiment. Such components will not be described in detail.

### First Example

In the present embodiment, the processor 30 compares the initial estimation residual value with the actual estimation residual value of the air conditioner 2. Based on the result of the comparison, the processor 30 specifies, from the operation records, an item in the operation condition of the indoor unit 11 and the operation condition of the outdoor unit 12 that was different from the operation condition at the beginning of the lease, and provides the specified item to the information terminal 24.

In an example, when the actual estimation residual value of the air conditioner 2 is less than the initial estimation residual value and the difference between the initial estimation residual value and the actual estimation residual value is greater than a predetermined value, the processor 30 obtains the operation record corresponding to a specific point in time from the air conditioner 2. The processor 30 obtains an expected operation from the initial operation condition to the specific point in time based on the lease contact and compares the expected operation and the actual operation. Based on the comparison of the expected operation with the actual operation, the processor 30 specifies an item that was different from the operation condition at the beginning of the lease. The processor generates predetermined information from the comparison result obtained from the comparison of the expected operation with the actual operation and provides the predetermined information to an information terminal 24 that is associated with the air conditioner 2.

The predetermined information includes the item that was different from the operation condition at the beginning of the lease. In an example, the operation condition at the beginning of the lease is operation information at the time of a lease contract. The predetermined information may include information identifying the air conditioner 2, the initial estimation residual value, and the actual estimation residual value. The predetermined information may include improvement proposal information for operation of the air conditioner 2.

The notification of deviation of the past operation from the operation condition prompts reconsideration of the operation to minimize the deviation of the residual value of the indoor unit 11 and the residual value of the outdoor unit 12 from the planned residual value.

### Second Example

In the present embodiment, the processor 30 compares the initial estimation residual value with the actual estimation residual value of the air conditioner 2. When the actual estimation residual value is deviated from the initial estimation residual value, the processor 30 infers a factor of the deviation of the actual estimation residual value from the initial estimation residual value. More specifically, the processor 30 compares the initial estimation residual value of the air conditioner 2 with the actual estimation residual value and infers a factor of the deviation of the actual estimation residual value from the initial estimation residual value based on a deviation of actuality from expectancy in at least one of the environment information, the installation condition, the operation information, or the maintenance information. This configuration provides the factor of deviation of the actual estimation residual value from the initial estimation residual value.

Preferably, the processor 30 generates information related to the factor of deviation of the actual estimation residual value from the initial estimation residual value and provides the predetermined information to an information terminal 24 that is associated with the air conditioner 2. This allows the user of the information terminal 24 to recognize the factor of deviation of the actual estimation residual value from the initial estimation residual value.

### Modified Examples of Assistance System, which do not form part of the present invention

In addition to the embodiments described above, the lease assistance system 10, which does not form part of the present invention, is applicable to, for example, modified examples that are described below and combinations of at least two of the modified examples that do not contradict each other.

The lease assistance system 10, which does not form part of the present invention, may be configured to execute at least one of the process for operating multiple indoor units 11 as described in the third embodiment or the process for operation multiple outdoor units 12 as described in the fourth embodiment.

More specifically, the lease assistance system 10, which does not form part of the present invention, manages an air conditioner 2 that includes multiple indoor units 11 and multiple outdoor units 12.

The processor 30 compares the initial estimation residual value of the air conditioner 2 with the actual estimation residual value and executes at least one of (a) or (b) described below.
(a) Based on a result of comparison of the initial estimation residual value with the actual estimation residual value, the processor 30 operates the indoor units 11 in order of priority from those having a higher residual value based on the actual use of the indoor units 11.
(b) Based on a result of comparison of the initial estimation residual value with the actual estimation residual value, the processor 30 operates the outdoor units 12 in order of priority from those having a higher residual value based on the actual use of the outdoor units 12.

This configuration has at least one of the advantages (a) or (b) described below. (a) The residual values of the indoor units 11 are equalized. The equalization of the residual values of the indoor units 11 avoids deviation of the residual value of a particular indoor unit 11 from the initial estimation residual value. (b) The residual values of the outdoor units 12 are equalized. The equalization of the residual values of the outdoor units 12 minimizes deviation of the residual value of a particular outdoor unit 12 from the initial estimation residual value.

In addition, preferably, the processor 30 compares the initial estimation residual value of the air conditioner 2 with the actual estimation residual value and executes at least one of (a) or (b) described below.
(a) Based on a result of comparison of the initial estimation residual value with the actual estimation residual value, the processor 30 operates the indoor units 11 so that the residual values of the indoor units 11 are equal to each other.
(b) Based on a result of comparison of the initial estimation residual value with the actual estimation residual value, the processor 30 operates the outdoor units 12 so that the residual values of the outdoor units 12 are equal to each other.

This configuration has at least one of the advantages (a) or (b) described below. (a) The residual values of the indoor units 11 are equalized. The equalization of the residual values of the indoor units 11 avoids a large deviation of the residual value of a particular indoor unit 11 from the initial estimation residual value. (b) The residual values of the outdoor units 12 are equalized. The equalization of the residual values of the outdoor units 12 avoids a large deviation of the residual value of a particular outdoor unit 12 from the initial estimation residual value.

Prediction of deviation of the actual estimation residual value from the initial estimation residual value is not limited to the example described in the first embodiment. For example, the processor 30 may predict a deviation of the actual estimation residual value from the initial estimation residual value based on a plan chart of power consumption of the air conditioner 2 and actual power consumption at the point of the prediction. The processor 30 may monitor an operation that is not included in the operation condition and predict deviation of the actual estimation residual value from the initial estimation residual value based on an operation time that is not included in the operation condition.

In the lease assistance system 10, which does not form part of the present invention, the initial estimation residual value may be calculated using various calculation processes of the initial estimation residual value shown in a residual value system. In the lease assistance system 10, the actual estimation residual value may be calculated using various calculation processes of the actual estimation residual value shown in a lease residual value system 1.

The various techniques shown in the description of the lease assistance system 10, which does not form part of the present invention, may be applied to assistance of use of not only an air conditioner 2 that is rented by a lease but also an air conditioner 2 that is rented by another means. For example, the various techniques shown in the description of the lease assistance system 10 are applied to assistance of use of an air conditioner 2 that is used by subscription.

In the case of subscription, under a predetermined operation condition about use of the air conditioner 2, the air conditioner 2 may be continuously used with a fixed amount of money. However, the usage rate of the air conditioner 2 greatly varies due to various factors such as climate change, the usage rate of the room including the air conditioner 2, changes in the thermal load on the room including the air conditioner 2. The operation of the air conditioner 2 is entrusted to the user. Therefore, the air conditioner 2 may be used beyond the range of the predetermined operation condition. In such a case, the residual value of the air conditioner 2 may be greatly decreased from the initial plan residual value, which was planned at the time of the subscription rental. In contrast, the air conditioner 2 may be seldom used, and the residual value of the air conditioner 2 may be greater than the initial plan residual value, which was planned at the time of the subscription rental. The various techniques shown in the description of the lease assistance system 10, which does not form part of the present invention, may lead the air conditioner 2 that is used by subscription to an appropriate use. As a result, deviation of the actual estimation residual value from the initial estimation residual value is minimized.

The various techniques shown in the description of the lease assistance system 10, which does not form part of the present invention, may be applied to assistance of use of the air conditioner 2 that has been sold. In an example, the various techniques shown in the description of the lease assistance system 10 is used to assist in the use of the air conditioner 2 so that the residual value of the air conditioner 2 becomes zero after a predetermined time.

The obtaining unit 22, the calculating unit 23, and the processor 30 of the management device 3 may be configured to be circuitry that includes 1) one or more processors that execute various processes in accordance with computer programs (software), 2) one or more dedicated hardware circuits that execute at least some of various processes such as application specific integrated circuits (ASICs), or 3) a combination of these. The processor includes a CPU and memory such as RAM and ROM. The memory stores program codes or commands configured to cause the CPU to execute processes. The memory, or a computer readable medium, includes any type of medium that is accessible by a general-purpose computer and a dedicated computer.

### REFERENCE SIGNS LIST

1) lease residual value calculation system; 2) air conditioner; 3) management device; 10) lease assistance system; 11) indoor unit; 12) outdoor unit; 13) refrigerant pipe; 14) indoor-side heat exchanger; 15) electronic expansion valve; 16) outdoor-side heat exchanger; 17) compressor; 18) controller; 19) communication unit; 20) predetermined device; 21) storage; 22) obtaining unit; 23) calculating unit; 24) information terminal; 25) notification device; 26) notification unit; 27) communication unit; 30) processor

## Claims

1. A residual value calculation system configured to accurately calculate a remaining life of an air conditioner (2) including an indoor unit (11) and an outdoor unit (12), the residual value calculation system comprising:
a management device (3) that manages the air conditioner (2), wherein the management device (3) includes:
an obtaining unit (22) that obtains first environment information related to an installation environment of the indoor unit (11) and second environment information related to an installation environment of the outdoor unit (12); and
a calculating unit (23) that calculates a residual value of the air conditioner (2) after use over a set period based on the first environment information and the second environment information, the residual value including an initial estimation residual value that is estimated before the air conditioner (2) is used and an actual estimation residual value that is based on actual use.

2. The residual value calculation system according to claim 1, wherein the air conditioner (2) includes an air conditioner (2) that is rented.

3. The residual value calculation system according to claim 1 or 2, wherein
the air conditioner (2) includes one or more indoor units (11) and one or more outdoor units (12),
the obtaining unit (22) obtains a contribution rate of each of the indoor units (11) and a contribution rate of each of the outdoor units (12) to the air conditioner (2),
the calculating unit (23) calculates a residual value of each of the indoor units (11) after use over the set period based on at least the first environment information,
the calculating unit (23) calculates a residual value of each of the outdoor units (12) after use over the set period based on at least the second environment information, and
the calculating unit (23) calculates a residual value of the air conditioner (2) based on the contribution rate of each of the indoor units (11), the contribution rate of each of the outdoor units (12), the residual value of each of the indoor units (11), and the residual value of each of the outdoor units (12).

4. The residual value calculation system according to claim 3, wherein the calculating unit (23) executes at least one of
calculating a residual value of each of the indoor units (11) after use over the set period based on a residual value of each component of the indoor unit (11) after use over the set period and a contribution rate of the component to the indoor unit (11), or
calculating a residual value of each of the outdoor units (12) after use over the set period based on a residual value of each component of the outdoor unit (12) after use over the set period and a contribution rate of the component to the outdoor unit (12).

5. The residual value calculation system according to claim 4, wherein
the obtaining unit (22) further obtains durability information of each component of each of the indoor units (11) and durability information of each component of each of the outdoor units (12),
the calculating unit (23) calculates a residual value of each component of each of the indoor units (11) after use over the set period based on at least the durability information of the component of the indoor unit (11) and the first environment information,
the calculating unit (23) calculates a residual value of each component of each of the outdoor units (12) after use over the set period based on at least the durability information of the component of the outdoor unit (12) and the second environment information,
the calculating unit (23) further corrects the durability information of each component of each of the indoor units (11) with a correction coefficient based on at least one of the first environment information, an installation condition, operation information, or maintenance information, and
the calculating unit (23) further corrects the durability information of each component of each of the outdoor units (12) with a correction coefficient based on at least one of the second environment information, an installation condition, operation information, or maintenance information.

6. The residual value calculation system according to claim 5, wherein each of the correction coefficients is a value learned by machine learning.

7. The residual value calculation system according to claim 5 or 6, wherein
when calculating, before use, an initial estimation residual value of each component of each of the indoor units (11) after use over the set period and an initial estimation residual value of each component of each of the outdoor units (12) after use over the set period, the calculating unit (23) uses initial first environment information, initial second environment information, an initial installation condition, planned operation information, and planned maintenance information, and
when calculating, during use, an actual estimation residual value of each component of each of the indoor units (11) after use over the set period and an actual estimation residual value of each component of each of the outdoor units (12) after use over the set period, the calculating unit (23) uses actual first environment information, actual second environment information, an actual installation condition, actual operation information, and actual maintenance information.

## Patentansprüche

1. Restwertberechnungssystem, das so konfiguriert ist, dass es eine Restlebensdauer einer Klimaanlage (2) genau berechnet, die eine Inneneinheit (11) und eine Außeneinheit (12) einschließt, wobei das Restwertberechnungssystem umfasst:
eine Verwaltungsvorrichtung (3), die die Klimaanlage (2) verwaltet, wobei die Verwaltungsvorrichtung (3) einschließt:
eine Erhaltungseinheit (22), die eine erste Umgebungsinformation, die sich auf eine Installationsumgebung der Inneneinheit (11) bezieht, und eine zweite Umgebungsinformation, die sich auf eine Installationsumgebung der Außeneinheit (12) bezieht, erhält; und
eine Berechnungseinheit (23), die einen Restwert der Klimaanlage (2) nach der Verwendung über einen festgelegten Zeitraum auf der Grundlage der ersten Umgebungsinformation und der zweiten Umgebungsinformation berechnet, wobei der Restwert einen geschätzten Anfangsrestwert, der geschätzt wird, bevor die Klimaanlage (2) verwendet wird, und einen geschätzten Ist-Restwert, der auf der tatsächlichen Verwendung basiert, einschließt.

2. Restwertberechnungssystem nach Anspruch 1, wobei die Klimaanlage (2) eine Klimaanlage (2) einschließt, die gemietet ist.

3. Restwertberechnungssystem nach Anspruch 1 oder 2, wobei
die Klimaanlage (2) eine oder mehrere Inneneinheiten (11) und eine oder mehrere Außeneinheiten (12) einschließt,
die Erhaltungseinheit (22) einen Beitragssatz jeder der Inneneinheiten (11) und einen Beitragssatz jeder der Außeneinheiten (12) zu der Klimaanlage (2) erhält,
die Berechnungseinheit (23) einen Restwert jeder der Inneneinheiten (11) nach der Verwendung über den festgelegten Zeitraum auf der Grundlage von zumindest der ersten Umgebungsinformation berechnet,
die Berechnungseinheit (23) einen Restwert jeder der Außeneinheiten (12) nach der Verwendung über den festgelegten Zeitraum auf der Grundlage von zumindest der zweiten Umgebungsinformation berechnet, und
die Berechnungseinheit (23) einen Restwert der Klimaanlage (2) auf der Grundlage des Beitragssatzes jeder der Inneneinheiten (11), des Beitragssatzes jeder der Außeneinheiten (12), des Restwertes jeder der Inneneinheiten (11) und des Restwertes jeder der Außeneinheiten (12) berechnet.

4. Restwertberechnungssystem nach Anspruch 3, wobei die Berechnungseinheit (23) zumindest eines ausführt von
Berechnen eines Restwerts jeder der Inneneinheiten (11) nach der Verwendung über den festgelegten Zeitraum auf der Grundlage eines Restwerts jeder Komponente der Inneneinheit (11) nach der Verwendung über den festgelegten Zeitraum und eines Beitragssatzes der Komponente zu der Inneneinheit (11), oder
Berechnen eines Restwerts jeder der Außeneinheiten (12) nach der Verwendung über den festgelegten Zeitraum auf der Grundlage eines Restwerts jeder Komponente der Außeneinheit (12) nach der Verwendung über den festgelegten Zeitraum und eines Beitragssatzes der Komponente zu der Außeneinheit (12).

5. Restwertberechnungssystem nach Anspruch 4, wobei
die Erhaltungseinheit (22) weiter eine Lebensdauerinformation jeder Komponente jeder der Inneneinheiten (11) und eine Lebensdauerinformation jeder Komponente jeder der Außeneinheiten (12) erhält,
die Berechnungseinheit (23) einen Restwert jeder Komponente jeder der Inneneinheiten (11) nach der Verwendung über den festgelegten Zeitraum auf der Grundlage zumindest der Lebensdauerinformation der Komponente der Inneneinheit (11) und der ersten Umgebungsinformation berechnet,
die Berechnungseinheit (23) einen Restwert jeder Komponente jeder der Außeneinheiten (12) nach der Verwendung über den festgelegten Zeitraum auf der Grundlage zumindest der Lebensdauerinformation der Komponente der Außeneinheit (12) und der zweiten Umgebungsinformation berechnet,
die Berechnungseinheit (23) weiter die Lebensdauerinformation jeder Komponente jeder der Inneneinheiten (11) mit einem Korrekturkoeffizienten korrigiert, basierend auf zumindest einer von der ersten Umgebungsinformation, einer Installationsbedingung, einer Betriebsinformation oder einer Wartungsinformation, und
die Berechnungseinheit (23) weiter die Lebensdauerinformation jeder Komponente jeder der Außeneinheiten (12) mit einem Korrekturkoeffizienten korrigiert, basierend auf zumindest einer von der zweiten Umgebungsinformation, einer Installationsbedingung, einer Betriebsinformation oder einer Wartungsinformation.

6. Restwertberechnungssystem nach Anspruch 5, wobei jeder der Korrekturkoeffizienten ein durch maschinelles Lernen erlernter Wert ist.

7. Restwertberechnungssystem nach Anspruch 5 oder 6, wobei
bei der Berechnung, vor der Verwendung, eines geschätzten Anfangsrestwerts jeder Komponente jeder der Inneneinheiten (11) nach der Verwendung über den festgelegten Zeitraum und eines geschätzten Anfangsrestwerts jeder Komponente jeder der Außeneinheiten (12) nach der Verwendung über den festgelegten Zeitraum, die Berechnungseinheit (23) eine anfängliche erste Umgebungsinformation, eine anfängliche zweite Umgebungsinformation, eine anfängliche Installationsbedingung, eine geplante Betriebsinformation und eine geplante Wartungsinformation verwendet, und
bei der Berechnung, während der Verwendung, eines geschätzten Ist-Restwerts jeder Komponente jeder der Inneneinheiten (11) nach der Verwendung über den festgelegten Zeitraum und eines geschätzten Ist-Restwerts jeder Komponente jeder der Außeneinheiten (12) nach der Verwendung über den festgelegten Zeitraum, die Berechnungseinheit (23) eine tatsächliche erste Umgebungsinformation, eine tatsächliche zweite Umgebungsinformation, eine tatsächliche Installationsbedingung, eine tatsächliche Betriebsinformation und eine tatsächliche Wartungsinformation verwendet.

## Revendications

1. Système de calcul de valeur résiduelle configuré pour calculer de manière précise une durée de vie restante d'un climatiseur (2) incluant une unité intérieure (11) et une unité extérieure (12), le système de calcul de valeur résiduelle comprenant :
un dispositif de gestion (3) qui gère le climatiseur (2), dans lequel le dispositif de gestion (3) inclut :
une unité d'obtention (22) qui obtient des premières informations d'environnement relatives à un environnement d'installation de l'unité intérieure (11) et des secondes informations d'environnement relatives à un environnement d'installation de l'unité extérieure (12) ; et
une unité de calcul (23) qui calcule une valeur résiduelle du climatiseur (2) après utilisation sur une période définie sur la base des premières informations d'environnement et des secondes informations d'environnement, la valeur résiduelle incluant une valeur résiduelle d'estimation initiale qui est estimée avant que le climatiseur (2) soit utilisé et une valeur résiduelle d'estimation réelle qui est basée sur l'utilisation réelle.

2. Système de calcul de valeur résiduelle selon la revendication 1, dans lequel le climatiseur (2) inclut un climatiseur (2) qui est loué.

3. Système de calcul de valeur résiduelle selon la revendication 1 ou la revendication 2, dans lequel
le climatiseur (2) inclut une ou plusieurs unités intérieures (11) et une ou plusieurs unités extérieures (12),
l'unité d'obtention (22) obtient un taux de contribution de chacune des unités intérieures (11) et un taux de contribution de chacune des unités extérieures (12) au climatiseur (2),
l'unité de calcul (23) calcule une valeur résiduelle de chacune des unités intérieures (11) après utilisation sur la période définie sur la base au moins des premières informations d'environnement,
l'unité de calcul (23) calcule une valeur résiduelle de chacune des unités extérieures (12) après utilisation sur la période définie sur la base au moins des secondes informations d'environnement, et
l'unité de calcul (23) calcule une valeur résiduelle du climatiseur (2) sur la base du taux de contribution de chacune des unités intérieures (11), du taux de contribution de chacune des unités extérieures (12), de la valeur résiduelle de chacune des unités intérieures (11) et de la valeur résiduelle de chacune des unités extérieures (12).

4. Système de calcul de valeur résiduelle selon la revendication 3, dans lequel l'unité de calcul (23) exécute au moins une action parmi
un calcul d'une valeur résiduelle de chacune des unités intérieures (11) après utilisation sur la période définie sur la base d'une valeur résiduelle de chaque composant de l'unité intérieure (11) après utilisation sur la période définie et d'un taux de contribution du composant à l'unité intérieure (11), ou
un calcul d'une valeur résiduelle de chacune des unités extérieures (12) après utilisation sur la période définie sur la base d'une valeur résiduelle de chaque composant de l'unité extérieure (12) après utilisation sur la période définie et d'un taux de contribution du composant à l'unité extérieure (12).

5. Système de calcul de valeur résiduelle selon la revendication 4, dans lequel
l'unité d'obtention (22) obtient en outre des informations de durabilité de chaque composant de chacune des unités intérieures (11) et des informations de durabilité de chaque composant de chacune des unités extérieures (12),
l'unité de calcul (23) calcule une valeur résiduelle de chaque composant de chacune des unités intérieures (11) après utilisation sur la période définie sur la base au moins des informations de durabilité du composant de l'unité intérieure (11) et des premières informations d'environnement,
l'unité de calcul (23) calcule une valeur résiduelle de chaque composant de chacune des unités extérieures (12) après utilisation sur la période définie sur la base au moins des informations de durabilité du composant de l'unité extérieure (12) et des secondes informations d'environnement,
l'unité de calcul (23) corrige en outre les informations de durabilité de chaque composant de chacune des unités intérieures (11) avec un coefficient de correction sur la base au moins d'un élément parmi les premières informations d'environnement, une condition d'installation, des informations de fonctionnement ou des informations de maintenance, et
l'unité de calcul (23) corrige en outre les informations de durabilité de chaque composant de chacune des unités extérieures (12) avec un coefficient de correction sur la base au moins d'un élément parmi les secondes informations d'environnement, une condition d'installation, des informations de fonctionnement ou des informations de maintenance.

6. Système de calcul de valeur résiduelle selon la revendication 5, dans lequel chacun des coefficients de correction est une valeur apprise par apprentissage automatique.

7. Système de calcul de valeur résiduelle selon la revendication 5 ou la revendication 6, dans lequel
lors du calcul, avant utilisation, d'une valeur résiduelle d'estimation initiale de chaque composant de chacune des unités intérieures (11) après utilisation sur la période définie et d'une valeur résiduelle d'estimation initiale de chaque composant de chacune des unités extérieures (12) après utilisation sur la période définie, l'unité de calcul (23) utilise des premières informations d'environnement initiales, des secondes informations d'environnement initiales, une condition d'installation initiale, des informations de fonctionnement planifiées et des informations de maintenance planifiées, et
lors du calcul, pendant utilisation, d'une valeur résiduelle d'estimation réelle de chaque composant de chacune des unités intérieures (11) après utilisation sur la période définie et d'une valeur résiduelle d'estimation réelle de chaque composant de chacune des unités extérieures (12) après utilisation sur la période définie, l'unité de calcul (23) utilise des premières informations d'environnement réelles, des secondes informations d'environnement réelles, une condition d'installation réelle, des informations de fonctionnement réelles et des informations de maintenance réelles.
